(19) **Europäisches Patentamt / European Patent Office / Office européen des brevets**

(11) **EP 4 108 731 A1**

(12) # EUROPEAN PATENT APPLICATION
published in accordance with Art. 153(4) EPC

(43) Date of publication:
**28.12.2022 Bulletin 2022/52**

(21) Application number: **21756439.2**

(22) Date of filing: **19.02.2021**

(51) International Patent Classification (IPC):
**C09J 4/06** (2006.01)   **C09J 11/06** (2006.01)
**C09J 133/06** (2006.01)   **B32B 37/12** (2006.01)
**G02B 5/02** (2006.01)   **B29C 65/48** (2006.01)
**C09J 7/30** (2018.01)   **B32B 7/022** (2019.01)
**B32B 3/26** (2006.01)

(52) Cooperative Patent Classification (CPC):
**B29C 65/48; B32B 3/26; B32B 7/022; B32B 37/12; C09J 4/06; C09J 7/30; C09J 11/06; C09J 133/06; G02B 5/02**

(86) International application number:
**PCT/JP2021/006453**

(87) International publication number:
**WO 2021/167091 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 JP 2020028233**

(71) Applicant: **Nitto Denko Corporation**
**Ibaraki-shi, Osaka 567-8680 (JP)**

(72) Inventors:
• **MIZUNO, Mizuho**
  **Ibaraki-shi, Osaka 567-8680 (JP)**
• **TANAKA, Akiko**
  **Ibaraki-shi, Osaka 567-8680 (JP)**
• **NAKAMURA, Kozo**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **ADHESIVE COMPOSITION LAYER, LAYERED PRODUCT, OPTICAL LAYERED PRODUCT, OPTICAL DEVICE, AND METHOD FOR PRODUCING OPTICAL LAYERED PRODUCT**

(57)   An adhesive composition layer is made from an adhesive composition that includes: a polymer including a copolymer of at least one (meth)acrylate monomer and at least one copolymerizable functional group-containing monomer selected from the group consisting of hydroxyl group-containing copolymerizable monomers, carboxyl group-containing copolymerizable monomers, and nitrogen-containing vinyl monomers; and a curable resin. The adhesive composition layer has a 23°C initial tensile modulus of elasticity of 0.35 MPa or more and yet 8.00 MPa or less before curing the curable resin in the adhesive composition, and a 23°C initial tensile modulus of elasticity of 1.00 MPa or more after curing the curable resin in the adhesive composition.

FIG.1

**Description**

## TECHNICAL FIELD

The present invention relates to: an adhesive composition layer; a multilayered body including an adhesive composition layer; an optical stack and optical device that includes an adhesive layer made from an adhesive composition layer as well as an optical sheet; and a production method for an optical stack.

## BACKGROUND ART

Optical sheets (e.g., microlens sheets, prism sheets, brightness enhancement films (e.g., Brightness Enhancement Film: BEF (registered trademark) manufactured by 3M) are used in various optical devices (e.g., display devices and illumination devices). In the present specification, "optical sheet" is not limited to those illustrated above, but broadly includes sheet-shaped optical components, and further includes, for example, diffusion plates and light guide plates. An optical device is attached to another optical sheet or an optical device by using an adhesive layer, for example. In the present specification, "optical stack" refers to a configuration including an optical sheet and an adhesive layer or including a plurality of optical sheets. In the present specification, "adhesive" is meant to encompass tackiness agents (also referred to as "pressure-sensitive adhesives").

The applicant has disclosed an optical stack (referred to as "optical sheet" in Patent Document 1) that can be used for display devices and illumination devices in Patent Document 1. The optical stack in Patent Document 1 has an optical sheet (e.g., microlens sheet) having a concavo-convex structure on its surface and an adhesive layer provided on the surface having the concavo-convex structure. The adhesive layer fills 5% to 90% of the convex height of the concavo-convex structure. The adhesive layer is formed from an adhesive composition containing a graft polymer, which is a (meth)acrylic polymer grafted with chains containing monomers containing cyclic ether groups, and a cationic photopolymerization initiator or thermosetting heat-curing catalyst.

## CITATION LIST

### PATENT LITERATURE

[Patent Document 1] Japanese Laid-Open Patent Publication No. 2012-007046 (Japanese Patent No. 5658490)
[Patent Document 2] International Publication No. 2019/087118

## SUMMARY OF INVENTION

### TECHNICAL PROBLEM

When attaching an optical sheet having a concavo-convex structure on its surface by using an adhesive layer, the degree to which the adhesive layer penetrates into (fills in) the dents of the concavo-convex structure affects the functionality of the optical sheet. Therefore, it is preferable that the degree to which the adhesive layer penetrates into the dents of the concavo-convex structure does not change over time.

It is preferable that, from the standpoint of mass producibility, optical stacks composed of an optical sheet and an adhesive layer or a plurality of optical sheets stacked together, which are used in optical devices, can be manufactured in roll-to-roll fashion.

The present invention was made in order to solve at least one of the above-mentioned problems, and an objective thereof is to provide: an adhesive composition layer such that the degree to which the adhesive layer penetrates into dents of the concavo-convex structure of an optical sheet has suppressed change over time; a multilayered body including such an adhesive composition layer; an optical stack or an optical stack capable of being produced in roll-to-roll fashion that includes an adhesive layer made from such an adhesive composition layer as well as an optical sheet; and a production method for such an optical stack. It is also an objective of the present invention to provide an optical device including such an optical stack.

### SOLUTION TO PROBLEM

According to embodiments of the present invention, means for solution as recited in the following Items are provided.

[Item 1]
An adhesive composition layer made from an adhesive composition that includes: a polymer including a copolymer of at least one (meth)acrylate monomer and at least one copolymerizable functional group-containing monomer selected from the group consisting of hydroxyl group-containing copolymerizable monomers, carboxyl group-containing copolymerizable monomers, and nitrogen-containing vinyl monomers; and a curable resin, wherein the adhesive composition layer has

a 23°C initial tensile modulus of elasticity of 0.35 MPa or more and yet 8.00 MPa or less before curing the curable resin in the adhesive composition, and
a 23°C initial tensile modulus of elasticity of 1.00 MPa or more after curing the curable resin in the adhesive composition.
The 23°C initial tensile modulus of elasticity after curing the curable resin in the adhesive composition may be 3.00 MPa or more, for example.

[Item 2]
An adhesive composition layer made from an adhesive composition that includes: a polymer including a copolymer of at least one (meth)acrylate monomer and at least one copolymerizable functional group-containing monomer selected from the group consisting of hydroxyl group-containing copolymerizable monomers, carboxyl group-containing copolymerizable monomers, and nitrogen-containing vinyl monomers; and a curable resin.

[Item 3]
The adhesive composition layer of Item 1 or 2, wherein,

the at least one copolymerizable functional group-containing monomer comprises a nitrogen-containing vinyl monomer; and
the mass ratio between the at least one (meth)acrylate monomer and the nitrogen-containing vinyl monomer is between 90:10 and 60:40.

[Item 4]
The adhesive composition layer of any one of Items 1 to 3, wherein,

the at least one copolymerizable functional group-containing monomer comprises a carboxyl group-containing copolymerizable monomer; and
the carboxyl group-containing copolymerizable monomer is contained in an amount of 1.0 mass part or more and yet 10.0 mass parts or less with respect to 100 mass parts of the polymer.

[Item 5] The adhesive composition layer of any one of Items 1 to 4, wherein the copolymer is cross-linked.
[Item 6] The adhesive composition layer of any one of Items 1 to 5, wherein the curable resin comprises a UV-curable resin having a weight average molecular weight of 4000 or more and a photopolymerization initiator.
[Item 7] The adhesive composition layer of any one of Items 1 to 6 having a 180° peel adhesive strength of 10 mN/20 mm or more with respect to a PMMA film after curing the curable resin in the adhesive composition.
[Item 8] The adhesive composition layer of any one of Items 1 to 7 having a haze of 0.01% or more and yet 5% or less after curing the curable resin in the adhesive composition.
[Item 9] The adhesive composition layer of any one of Items 1 to 8 having a gel fraction of 75% or more before curing the curable resin in the adhesive composition, and a gel fraction of 90% or more after curing the curable resin in the adhesive composition.
[Item 10] The adhesive composition layer of any one of Items 1 to 9, wherein the adhesive composition does not comprise a graft polymer.
[Item 11] The adhesive composition layer of any one of Items 1 to 10, having a thickness of 0.1 $\mu$m or more and yet 20 $\mu$m or less after curing the curable resin in the adhesive composition.
[Item 12] A multilayered body comprising:

the adhesive composition layer of any one of Items 1 to 11; and
a substrate having a release-treated principal face,
wherein the release-treated principal face of the substrate is attached onto the adhesive composition layer.
The multilayered body recited in Item 12 may be referred to as an "adhesive sheet".
The multilayered body recited in Item 12 may, for example, further comprise another substrate being disposed on an opposite side of the adhesive composition layer from the substrate, the substrate having a release-treated principal face. In this case, the release-treated principal face of the other substrate is attached onto the adhesive composition layer.

The release-treated face (release-treated surface) refers to a surface that has been treated with a release agent. The release-treated principal face of the substrate (supporting body) is formed by applying (introducing) a release agent on one of the principal faces of the substrate, and further drying it, etc., as necessary. Although not particularly limited, examples of the release agent are silicone-based release agents, fluorine-based release agent, long-chain alkyl-based release agents, and fatty acid amide-based release agents.

[Item 13] An optical stack comprising:

a first optical sheet including a first principal face having a concavo-convex structure and a second principal face on an opposite side from the first principal face; and
an adhesive layer disposed on the first principal face of the first optical sheet, wherein,
the adhesive layer is formed by curing a curable resin in an adhesive composition that contains a polymer and the curable resin; and the adhesive composition has
a 23°C initial tensile modulus of elasticity of 0.35 MPa or more and yet 8.00 MPa or less before curing the curable resin in the adhesive composition, and
a 23°C initial tensile modulus of elasticity of 1.00 MPa or more after curing the curable resin in the adhesive composition.
The 23°C initial tensile modulus of elasticity after curing the curable resin in the adhesive composition may be 3.00 MPa or more, for example.

[Item 14] The optical stack of Item 13, wherein the adhesive layer is formed by curing the curable resin in the adhesive composition layer of any one of Items 1 to 11.
[Item 15] The optical stack of Item 13 or 14, wherein the concavo-convex structure includes a plurality of dents, and a surface of the adhesive layer and the first principal face of the first optical sheet define a plurality of spaces within the plurality of dents.
[Item 16] The optical stack of any one of Items 13 to 15, wherein the concavo-convex structure includes a flat portion that is in contact with the adhesive layer.
[Item 17] The optical stack of any one of Items 13 to 16, further comprising a second optical sheet disposed on an opposite side of the adhesive layer from the first optical sheet.
[Item 18] An optical device comprising the optical stack of any one of Items 13 to 17.
[Item 19] A method of producing the optical stack of any one of Items 13 to 17, comprising:

a step A of applying the adhesive composition layer made from the adhesive composition onto the first principal face of the first optical sheet; and
a step B of, with the adhesive composition layer being applied on the first principal face of the first optical sheet, curing the curable resin in the adhesive composition.

[Item 20] The production method of Item 19, wherein the step A comprises a step of attaching together the first optical sheet and the adhesive composition layer by roll-to-roll method.
[Item 21] A production method for the optical stack of Item 17, comprising:
either one of

a step A1 of attaching together: a first multilayered body in which the first optical sheet and the adhesive composition layer made from the adhesive composition are stacked; and the second optical sheet, or
a step A2 of attaching together: a second multilayered body in which the adhesive composition layer made from the adhesive composition and the second optical sheet are stacked; and the first optical sheet; and
a step B of, after the step A1 or the step A2, curing the curable resin comprised in the adhesive composition layer.

[Item 22] The production method of Item 21, wherein: the production method comprises the step A1, the step A1 comprising a step of attaching together the first multilayered body and the second optical sheet by roll-to-roll method; or
the production method comprises the step A2, the step A2 comprising a step of attaching together the second multilayered body and the first optical sheet by roll-to-roll method.

## ADVANTAGEOUS EFFECTS OF INVENTION

According to an embodiment of the present invention, there is provided: an adhesive composition layer capable of producing an adhesive layer such that the degree to which the adhesive layer penetrates (fills) into dents of the concavo-convex structure of an optical sheet has suppressed change over time; a multilayered body including such an adhesive composition layer; an optical stack or an optical stack capable of being produced in roll-to-roll fashion that includes an adhesive layer made from such an adhesive composition layer as well as an optical sheet; and a production method for such an optical stack. According to another embodiment of the present invention, an optical device including such an optical stack is provided.

## BRIEF DESCRIPTION OF DRAWINGS

[FIG. **1**] A schematic cross-sectional view of an optical stack **100A** according to an embodiment of the present invention.
[FIG. **2**] A schematic cross-sectional view of an optical stack **101A** according to another embodiment of the present invention.
[FIG. **3**] A schematic cross-sectional view showing an optical stack **100B** and an optical stack **101B** according to still another embodiment of the present invention.
[FIG. **4**] A schematic perspective view of a first optical sheet **10b** included in the optical stack **100B**.
[FIG. **5**] A schematic cross-sectional view of an illumination device **200** including the optical stack **100B**.
[FIG. **6A**] A schematic plan view of a textured film 70 included in an optical stack according to an embodiment of the present invention.
[FIG. **6B**] A schematic cross-sectional view of the textured film **70**.

## DESCRIPTION OF EMBODIMENTS

First, an adhesive composition layer, a multilayered body including an adhesive composition layer, an adhesive layer made from an adhesive composition layer, an optical stack that includes an adhesive layer and an optical sheet, and a production method for an optical stack according to an embodiment of the present invention will be described.

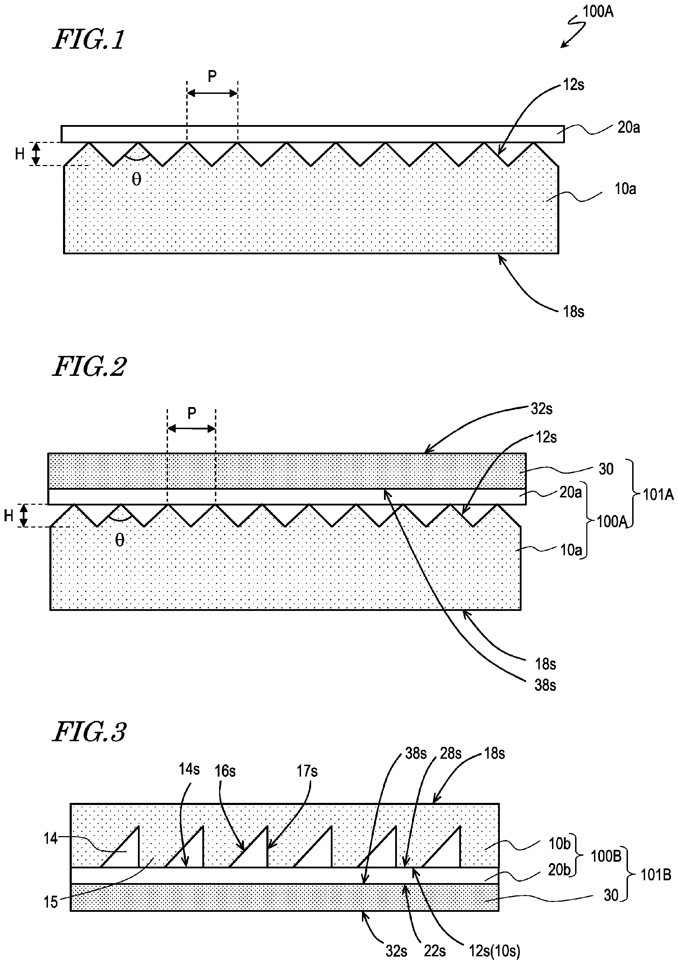

FIG. **1** and FIG. **2** show schematic cross-sectional views of optical stacks **100A** and **101A** according to an embodiment of the present invention, respectively. As shown in FIG. **1**, the optical stack **100A** includes an adhesive layer **20a** on a concavo-convex structure of a prism surface (first principal face) **12s** of a prism sheet (first optical sheet) **10a.** Instead of the prism sheet **10a,** other optical sheets (e.g., microlens sheets) may be used. As shown in FIG. **2**, the optical stack **101A** includes the optical stack **100A** and a second optical sheet **30** disposed on an opposite side of the adhesive layer **20a** from the first optical sheet **10a.** The description concerning the optical stack **100A** also applies to the optical stack **101A** unless otherwise specified, and therefore may be omitted in order to avoid redundancy.

The adhesive layer **20a** is formed by curing a curable resin in an adhesive composition that contains a polymer and the curable resin. The adhesive layer **20a** is formed in the following manner. First, on the first principal face **12s** of the optical sheet **10a,** an adhesive composition layer made from the adhesive composition is applied. Then, with the adhesive composition layer being appplied on the first principal face **12s** of the optical sheet **10a,** the curable resin in the adhesive composition is cured by applying heat or radiating active energy rays to the adhesive composition layer. Herein, when the adhesive composition layer to become the adhesive layer **20a** is attached to the prism sheet **10a** by e.g. a roll-to-roll method, it is required that the adhesive composition layer does not penetrate too much into the dents of the concavo-convex structure of the prism sheet **10a.** When attaching the adhesive composition layer to the prism sheet **10a** by e.g. a roll-to-roll method, a certain level of softness (ease of deformation) or higher is required. Moreover, after the adhesive layer **20a** is formed on the prism surface **12s** of the prism sheet **10a,** it is required that the degree to which the adhesive layer **20a** penetrates into the dents is unlikely to change over time.

Similarly, in the optical stack **101A**, it is required to suppress deformation of the adhesive composition layer at the time of forming the adhesive layer **20a** and also suppress deformation over time after the adhesive layer **20a** has been formed. The optical stack **101A** can be produced by, for example, after producing the optical stack **100A** by the above method, attaching together the optical stack **100A** and the second optical sheet **30** disposed on an opposite side of the adhesive layer **20a** of the optical stack **100A** from the first optical sheet **10a.** Alternatively, with the adhesive composition layer being applied between the first optical sheet **10a** and the second optical sheet **30** so as to be in contact with the first the first principal face **12s** of the optical sheet **10a,** heat may be applied or active energy rays may be radiated to the adhesive composition layer to cure the curable resin in the adhesive composition and to form the adhesive layer **20a,** thereby producing the optical stack **101A.** A multilayered body of the first optical sheet **10a,** the adhesive composition layer, and the second optical sheet **30** may be formed by attaching together a multilayered body in which the first optical sheet **10a** and the adhesive composition layer are stacked and the second optical sheet 30, by e.g. a roll-to-roll method, or by attaching together the first optical sheet **10a** and a multilayered body in which the adhesive composition layer are stacked and the second optical sheet **30,** by e.g. a roll-to-roll method.

The inventors have found that a suitable adhesive can be selected by utilizing: an initial tensile modulus of elasticity of the adhesive composition before curing the curable resin in the adhesive composition forming the adhesive layer **20a;** and an initial tensile modulus of elasticity of the adhesive composition after curing the curable resin in the adhesive composition forming the adhesive layer **20a.** In the present specification, an initial tensile modulus of elasticity of an adhesive composition is to be measured as illustrated in the experimental examples described below. Note that the degree of penetration of the adhesive layer into the dents can be evaluated based on a diffuse transmittance of the optical stack **100A or** the optical stack **101A.** The greater the degree to which the adhesive layer **20a** penetrates into the dents of the prism sheet **10a** is, the smaller the diffuse transmittance is. The diffuse transmittance of an optical stack is to be measured as illustrated in the experimental examples described below.

As will be described later in the experimental examples, the adhesive composition forming the adhesive layer **20a** in the optical stack **100A** according to an embodiment of the present invention has a 23°C initial tensile modulus of elasticity of 0.35 MPa or more and yet 8.00 MPa or less before curing the curable resin in the adhesive composition, and a 23°C initial tensile modulus of elasticity of 1.00 MPa or more after curing the curable resin in the adhesive composition.

Because the 23°C initial tensile modulus of elasticity of the adhesive composition before curing the curable resin in the adhesive composition is 0.35 MPa or more, the adhesive composition is restrained from entering into the plurality of dents at the formation of the adhesive layer **20a,** i.e., when applying the adhesive composition layer on the first principal face **12s** of the optical sheet **10a.** Because the 23°C initial tensile modulus of elasticity of the adhesive composition before curing the curable resin in the adhesive composition is 8.00 MPa or less, the adhesive composition layer has enough softness (ease of deformation) for being applied onto the first principal face **12s** of the optical sheet **10a.** If the 23°C initial tensile modulus of elasticity of the adhesive composition before curing the curable resin in the adhesive composition is greater than 8.00 MPa, the adhesive composition layer may not have sufficient adhesive strength with respect to the first principal face **12s** of the optical sheet **10a.** Because the 23°C initial tensile modulus of elasticity of the adhesive composition after curing the curable resin in the adhesive composition is 1.00 MPa or more, after the adhesive layer **20a** is formed, entry into the plurality of dents through deformation over time of the adhesive layer **20a** is suppressed. Since deformation of the adhesive composition layer at the time of forming the adhesive layer **20a** and also deformation over time after the adhesive layer **20a** has been formed are both suppressed, the optical stack **100A** can provide an improved light extraction efficiency.

For example, the 23°C initial tensile modulus of elasticity of the adhesive composition before curing the curable resin in the adhesive composition may be e.g. 0.35 MPa or more, 0.40 MPa or more, 0.45 MPa or more, or 0.50 MPa or more, and yet 8.00 MPa or less, 7.70 MPa or less, 7.50 MPa or less, 7.00 MPa or less, 6.50 MPa or less, 6.00 MPa or less, 5.50 MPa or less, 5.00 MPa or less, 4.50 MPa or less, 4.00 MPa or less, 3.50 MPa or less, or 3.00 MPa or less. The 23°C initial tensile modulus of elasticity of the adhesive composition after curing the curable resin in the adhesive composition may be e.g. 1.00 MPa or more, 1.50 MPa or more, 2.00 MPa or more, 2.50 MPa or more, 3.00 MPa or more, 3.50 MPa or more, 4.00 MPa or more, 4.50 MPa or more, or 5.00 MPa or more. Although the upper limit of the 23°C initial tensile modulus of elasticity of the adhesive composition after curing the curable resin in the adhesive composition is not particularly limited, it may be 1000 MPa or less, 800 MPa or less, 600 MPa or less, 400 MPa or less, or 200 MPa or less, for example. It is more preferable that the 23°C initial tensile modulus of elasticity of the adhesive composition before curing the curable resin in the adhesive composition is 0.40 MPa or more and yet 7.70 MPa or less and the 23°C initial tensile modulus of elasticity of the adhesive composition after curing the curable resin in the adhesive composition is 3.00 MPa or more.

The gel fraction before curing the curable resin in the adhesive composition is e.g. 75% or more, and the gel fraction after curing the curable resin in the adhesive composition is e.g. 90% or more. Although the upper limit of the gel fraction is not particularly limited, it may be 100%, for example.

Examples of the curable resin included in the adhesive composition are active energy rays (e.g., visible light and ultraviolet) curable resins, thermosetting resins, and moisture-curable resins. In one embodiment, the curable resin included in the adhesive composition includes a UV-curable resin and a photopolymerization initiator, for example, and is cured by light (ultraviolet) irradiation. From the standpoint of restraining the adhesive composition layer from entering into the plurality of dents, the UV-curable resin preferably has a weight average molecular weight of 4000 or more, for example.

The polymer included in the adhesive composition may be, for example, a copolymer, including a copolymer of: at least one (meth)acrylate monomer (e.g., alkyl (meth)acrylate); and at least one copolymerizable functional group-containing monomer selected from the group consisting of hydroxyl group-containing copolymerizable monomers, carboxyl group-containing copolymerizable monomers, and nitrogen-containing vinyl monomers. In the case where the at least one copolymerizable functional group-containing monomer includes a nitrogen-containing vinyl monomer, the mass ratio between the (meth)acrylate monomer and the nitrogen-containing vinyl monomer is e.g. between 95:5 and 50:50, between 95:5 and 55:45, between 95:5 and 60:40, between 90:10 and 50:50, between 90:10 and 55:45, between 90:10 and 60:40, between 85:15 and 50:50, between 85:15 and 55:45, between 85:15 and 60:40, between 80:20 and 50:50, between 80:20 and 55:45, between 80:20 and 60:40, between 75:25 and 50:50, between 75:25 and 55:45, or between 75:25 and 60:40, and preferably between 90:10 and 60:40.

The polymer contained in the adhesive composition may be cross-linked. For example, in the step of forming the adhesive layer **20a,** before applying the adhesive composition layer onto the first principal face **12s** of the optical sheet **10a,** the polymer in the adhesive composition is (e.g., by heating) cross-linked. The adhesive layer **20a** is formed by the following method, for example. First, an adhesive composition solution layer is formed from an adhesive composition solution containing a polymer, a cross-linking agent, an active energy ray-curable resin, a polymerization initiator, and a solvent. The adhesive composition solution layer is formed, for example, on a release-treated principal face of a substrate. The solvent in the adhesive composition solution layer is then removed, and the polymer in the adhesive composition solution layer is (e.g., by heating) cross-linked with the cross-linking agent to obtain an adhesive composition layer having a cross-linked structure. When the adhesive composition solution layer is formed on the release-treated principal face of the substrate, the adhesive composition layer becomes formed on the release-treated principal face of the substrate, whereby a multilayered body having the substrate and the adhesive composition layer is obtained. Now, the cross-linked structure that is formed of the polymer and the cross-linking agent will be referred to as the first cross-linked structure. This is to be distinguished from the cross-linked structure formed by curing the active energy ray-curable resin (second cross-linked structure), which will be described later. The polymer in the adhesive composition solution layer may be cross-linked in the step of removing the solvent in the adhesive composition solution layer; or, a further step of cross-linking the polymer in the adhesive composition solution layer may be performed after and separately from the step of removing the solvent in the adhesive composition solution layer. Thereafter, the adhesive composition layer is attached onto the first principal face 12s of the optical sheet 10a, and with the adhesive composition layer placed on the first principal face **12s** of the optical sheet **10a,** the adhesive composition layer is irradiated with active energy rays to cure the active energy ray-curable resin, whereby the adhesive layer **20a** having the second cross-linked structure in addition to the first cross-linked structure can be formed on the first principal face **12s** of the optical sheet **10a.** The first cross-linked structure and the second cross-linked structure possessed by the adhesive layer **20a** can be considered as forming a so-called interpenetrating polymer network structure (IPN).

The second optical sheet **30** has a principal face **38s** on the adhesive layer **20a** side and a principal face **32s** on the opposite side of the principal face **38s**. The principal face **38s** is a flat surface. Depending on the purpose, any suitable material may be adopted for the second optical sheet **30**. The material of the second optical sheet **30** may for example be a light-transmitting thermoplastic resin, and more specifically a film made of a (meth)acrylic resin such as polymethyl methacrylate (PMMA), or a polycarbonate (PC)-based resin or the like. At least one other optical component (or an optical sheet) may be disposed on the opposite side of the second optical sheet **30** of the optical stack **101A** from the adhesive layer **20a** (i.e., on the principal face **32s).** The other optical component (optical sheet) includes e.g. a diffusion plate, a light guide plate, or the like, and is adhesively bonded onto the principal face **32s** of the optical sheet **30** via an adhesive layer. In other words, an optical stack according to another embodiment of the present invention includes an optical stack **101A** and another optical sheet disposed on the opposite side of the second optical sheet **30** of the optical stack **101A** from the adhesive layer **20a.** An optical device according to another embodiment of the present invention includes an optical stack **101A** and at least one other optical component disposed on the opposite side of the second optical sheet **30** of the optical stack **101A** from the adhesive layer **20a.**

The adhesive layer **20a** has a 180° peel adhesive strength with respect to a PMMA film of e.g. 10 mN/20 mm or more. Although not particularly limited, its upper limit may be e.g. 50 N/20 mm or less, 40 N/20 mm or less, 30 N/20 mm or less, 20 N/20 mm or less, 10 N/20 mm or less, or 1 N/20 mm or less. The adhesive layer **20a** has a haze of e.g. 0.01% or more, and yet 5% or less, 4% or less, 3% or less, 2% or less, or 1.5% or less. The thickness of the adhesive layer **20a** is e.g. 0.1 $\mu$m or more, 0.5 $\mu$m or more, or 1.0 $\mu$m or more, and yet 20 $\mu$m or less, 15 $\mu$m or less, 10 $\mu$m or less, or 5 $\mu$m or less. Note that the 180° peel adhesive strength with respect to a PMMA film of the adhesive layer and the haze of the adhesive layer can be measured by a method described in the experimental examples below, for example.

The following adhesives may suitably used for the adhesive forming the adhesive layer **20a,** as will be described later with respect to experimental examples.

The adhesive contains a (meth)acrylic polymer, for example, where the (meth)acrylic polymer is a copolymer of a nitrogen-containing (meth)acrylic monomer and at least one other kind of monomer, for example. The nitrogen-containing (meth)acrylic monomer has a nitrogen-containing cyclic structure, for example. When a (meth)acrylic polymer is prepared by using a nitrogen-containing (meth)acrylic monomer, an effect of improving the elastic property of the (meth)acrylic polymer is obtained especially when the nitrogen-containing (meth)acrylic monomer has a nitrogen-containing cyclic structure.

In the case where the adhesive contains a (meth)acrylic polymer, the (meth)acrylic polymer is preferably cross-linked. In the case where the adhesive contains a (meth)acrylic polymer, the adhesive may further include an active energy ray-curable resin (e.g. a UV-curable resin) and a curing agent (e.g. a photopolymerization initiator), or may further contain a cured material of an active energy ray-curable resin. The active energy rays may be visible light and ultraviolet, for example. By introducing a cross-linked structure into the adhesive, the elastic property of the adhesive can be improved. In particular, by curing the active ray-curable resin after applying the adhesive composition layer (which becomes the adhesive layer **20a)** to the optical sheet **10a,** the elastic property of the adhesive layer **20a** can be improved, and the change over time in the degree to which the adhesive layer **20a** penetrates into the dents can be suppressed. When the active energy ray-curable resin is cured, the adhesive layer **20a** becomes hard. If the adhesive layer **20a** is too hard, it may be difficult to attach the adhesive layer **20a** to the optical sheet **10a** by a roll-to-roll method. However, this problem can be avoided if the active energy ray-curable resin is cured after the adhesive composition layer is applied to the optical sheet **10a.**

Preferably, the adhesives does not contain any graft polymer. When formed from an adhesive composition containing graft polymers, as in the adhesive layer described in Patent Document 1, there are many design and control factors for the material, which may result in less mass producibility. Adhesives containing no graft polymer can have their creep characteristics adjusted by various factors (e.g., type and amount of cross-linking agent, type and amount of active ray-curable resin).

Suitable specific examples of the adhesive are described below.

The adhesive includes a (meth)acrylic polymer, for example. Without particular limitation, any (meth)acrylate can be used as a monomer for producing the (meth) acrylic polymer. For example, an alkyl (meth)acrylate having an alkyl group with 4 or more carbon atoms can be used. In this case, the ratio of the alkyl (meth)acrylate having an alkyl group with 4 or more carbon atoms to the total amount of monomer used in the production of the (meth)acrylic polymer is, for example, 50 mass% or more.

In the present specification, "alkyl (meth)acrylate" refers to any (meth)acrylate having straight or branched-chain alkyl groups. The number of carbon atoms in the alkyl group possessed by the alkyl (meth)acrylate is preferably 4 or more, and more preferably the number of carbon atoms is 4 or more and yet 9 or less. Note that (meth)acrylate refers to acrylates and/or methacrylates.

Specific examples of alkyl (meth)acrylates include n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate, and the like. These can be used alone or in combination.

The adhesive may include a (meth)acrylic polymer that is a copolymer of a nitrogen-containing (meth)acrylic monomer and at least one other kind of monomer. In this case, the (meth)acrylic polymer is preferably a copolymer obtained by copolymerizing the following monomers in the following amounts, when the total amount of monomers used for copolymerization is 100 mass parts.

Nitrogen-containing (meth)acrylic monomer: 10.0 mass parts or more, 15.0 mass parts or more, 20.0 mass parts or more, 25.0 mass parts or more, 30.0 mass parts or more, or 35.0 mass parts or more, and yet 40.0 mass parts or less, 35.0 mass parts or less, 30.0 mass parts or less, 25.0 mass parts or less, 20.0 mass parts or less, or 15.0 mass parts or less. For example, 10.0 mass parts or more and yet 40.0 mass parts or less.

Hydroxyl group-containing acrylic monomer: 0.05 mass parts or more, 0.75 mass parts or more, 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, 2.0 mass parts or less, or 1.0 mass part or less. For example, 0.05 mass parts or more and yet 10.0 mass parts or less.

Carboxyl group-containing acrylic monomer: 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, or 2.0 mass parts or less. For example, 1.0 mass part or more and yet 10.0 mass parts or less.

Alkyl (meth)acrylate monomer: (100 mass parts)-(total amount of monomers other than alkyl (meth)acrylate monomer that are used for copolymerization)

In the present specification, a "nitrogen-containing (meth)acrylic monomer" includes, without particular limitation, monomers which include a polymerizable functional group having an unsaturated double bond of (meth)acryloyl groups, and which include a nitrogen atom. A "nitrogen-containing (meth)acrylic monomer" has a nitrogen-containing cyclic structure, for example. Examples of nitrogen-containing cyclic structures are N-vinyl-2-pyrrolidone (NVP), N-vinyl-ε-caprolactam (NVC), and 4-acryloyl morpholine (ACMO). These can be used alone or in combination.

In the present specification, a "hydroxyl group-containing acrylic monomer" includes, without particular limitation, monomers which include a polymerizable functional group having an unsaturated double bond of (meth)acryloyl groups, and which include a hydroxyl group. Examples thereof include: hydroxyalkyl (meth)acrylates, such as 2-hydroxybutyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 8-hydroxyoctyl(meth)acrylate, 10-hydroxydecyl (meth)acrylate, and 12-hydroxylauryl (meth)acrylate; 4-hydroxymethylcyclohexyl (meth)acrylate, 4-hydroxybutyl vinyl ether, and the like.

In the present specification, a "carboxyl group-containing acrylic monomer" includes, without particular limitation, monomers which include a polymerizable functional group having an unsaturated double bond of (meth)acryloyl groups or vinyl groups, etc., and which include a carboxyl group. Examples of unsaturated carboxylic acid-containing monomers are (meth)acrylic acid, carboxyethyl (meth)acrylate, carboxypentyl (meth)acrylate, itaconic acid, maleic acid, fumaric acid, crotonic acid, and the like. These can be used alone or in combination.

The adhesive may contain a (meth)acrylic polymer that is a copolymer of a carboxyl group-containing acrylic monomer and at least one other kind of monomer (except for nitrogen-containing (meth)acrylic monomers). In this case, the (meth)acrylic polymer is preferably a copolymer obtained by copolymerizing the following monomers in the following amounts, when the total amount of monomers used for copolymerization is 100 mass parts.

Carboxyl group-containing acrylic monomer: 1.0 mass part or more, 2.0 mass parts or more, 3.0 mass parts or more, 4.0 mass parts or more, 5.0 mass parts or more, 6.0 mass parts or more, 7.0 mass parts or more, 8.0 mass parts or more, or 9.0 mass parts or more, and yet 10.0 mass parts or less, 9.0 mass parts or less, 8.0 mass parts or less, 7.0 mass parts or less, 6.0 mass parts or less, 5.0 mass parts or less, 4.0 mass parts or less, 3.0 mass parts or less, or 2.0 mass parts or less. For example, 1.0 mass part or more and yet 10.0 mass parts or less.

Alkyl (meth)acrylate monomer: 90.0 mass parts or more, 91.0 mass parts or more, 92.0 mass parts or more, 93.0 mass parts or more, 94.0 mass parts or more, 95.0 mass parts or more, 96.0 mass parts or more, 97.0 mass parts or more, or 98.0 mass parts or more, and yet 99.0 mass parts or less, 98.0 mass parts or less, 97.0 mass parts or less, 96.0 mass parts or less, 95.0 mass parts or less, 94.0 mass parts or less, 93.0 mass parts or less, 92.0 mass parts or less, or 91.0 mass parts or less. For example, 90.0 mass parts or more and yet 99.0 mass parts or less.

Cross-linking agents for introducing a cross-linked structure to a (meth)acrylic polymer include cross-linking agents such as isocyanate-based cross-linking agents, epoxy-based cross-linking agents, silicone-based cross-linking agents, oxazoline-based cross-linking agents, aziridine-based cross-linking agents, silane-based cross-linking agents, alkyl-etherated melamine-based cross-linking agents, metal chelate-based cross-linking agents, and peroxides. Each cross-linking agent may be alone or two or more kinds may be used in combination.

An isocyanate-based cross-linking agent is meant to be a compound that includes two or more isocyanate groups (including isocyanate-regenerated functional groups in which the isocyanate group is temporarily protected with a blocking agent or through multimerization, etc.) within one molecule.

Isocyanate-based cross-linking agents include: aromatic isocyanates such as tolylene diisocyanate and xylene diisocyanate; alicyclic isocyanates such as isophorone diisocyanate; aliphatic isocyanates such as hexamethylene diisocyanate; and the like.

More specifically, examples may be: lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylenediisocyanate, and polymethylene polyphenylisocyanate; isocyanate adducts such as trimethylolpropane/tolylene diisocyanate trimer adduct (manufactured by Tosoh Corporation, product name: Coronate L), trimethylolpropane/hexamethylene diisocyanate trimer adduct (manufactured by Tosoh Corporation, product name: Coronate HL), isocyanurate of hexamethylene diisocyanate (manufactured by Tosoh Corporation, product name: Coronate HX); trimethylolpropane adduct of xylylenediisocyanate (manufactured by Mitsui Chemicals, Inc., product name: D110N), trimethylolpropane adduct of hexamethylene diisocyanate (manufactured by Mitsui Chemicals, Inc., product name: D160N); polyether polyisocyanate, polyester polyisocyanate, and adducts of these with various polyols, polyisocyanates multifunctionalized with isocyanurate bonds, burette bonds, allophanate bonds, or the like, and so on.

Each isocyanate-based cross-linking agent may be used alone, or two or more of them may be used in a mixture. The blended amount of the isocyanate-based cross-linking agent(s) is, with respect to 100 mass parts of a (meth)acrylic polymer, e.g. 0.01 mass parts or more, 0.02 mass parts or more, 0.05 mass parts or more, or 0.1 mass parts or more, and yet 10 mass parts or less, 9 mass parts or less, 8 mass parts or less, 7 mass parts or less, 6 mass parts or less, or 5 mass parts or less, and preferably, 0.01 mass parts or more and yet 10 mass parts or less, 0.02 mass parts or more and yet 9 mass parts or less, or 0.05 mass parts or more and yet 8 mass parts or less. The blended amount may be adjusted appropriately in consideration of cohesion, inhibition of peeling in durability tests, and other factors.

In an aqueous dispersion solution of a modified (meth)acrylic polymer prepared by emulsion polymerization, it is not necessary to use an isocyanate-based cross-linking agent; if necessary, however, a blocked isocyanate-based cross-linking agent can be used because it reacts easily with water.

An epoxy-based cross-linking agent is a multifunctional epoxy compound having two or more epoxy groups within one molecule. Examples of epoxy-based cross-linking agents are: bisphenol A, epichlorohydrin-type epoxy-based resins, ethylene glycidyl ether, N,N,N',N'-tetraglycidyl-m-xylenediamine, diglycidylaniline, diamine glycidylamine, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, glycerin diiglycidyl ether, glycerin triglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, and bisphenol-S-diglycidyl ether, as well as epoxy-based resins having two or more epoxy groups within the molecule, etc. As epoxy-based cross-linking agents, for example, those manufactured by Mitsubishi Gas Chemical Company, Inc., product names: "Tetrad C", "Tetrad X", etc., can be used.

Each epoxy-based cross-linking agent may be used alone, or two or more of them may be used in a mixture. The blended amount of the epoxy-based cross-linking agent(s) is, with respect to 100 mass parts of a (meth) acrylic polymer, e.g. 0.01 mass parts or more, 0.02 mass parts or more, 0.05 mass parts or more, or 0.1 mass parts or more, and yet 10 mass parts or less, 9 mass parts or less, 8 mass parts or less, 7 mass parts or less, 6 mass parts or less, or 5 mass parts or less, and preferably, 0.01 mass parts or more and yet 10 mass parts or less, 0.02 mass parts or more and yet 9 mass parts or less, or 0.05 mass parts or more and yet 8 mass parts or less.

The blended amount may be adjusted appropriately in consideration of cohesion, inhibition of peeling in durability tests, and so on.

As a peroxide cross-linking agent, those which generate radical active species upon heating and promote cross-linking of the base polymer of the tackiness agent can be used as appropriate; in consideration of workability and stability, however, peroxides having a 1 minute half-life temperature of not less than 80°C and not more than 160°C are preferably used, and peroxides having a 1 minute half-life temperature of not less than 90°C and not more than 140°C are more preferably used.

As the peroxide, for example, di(2-ethylhexyl)peroxydicarbonate (1 minute half-life temperature: 90.6°C), di(4-t-butylcyclohexyl)peroxydicarbonate (1 minute half-life temperature: 92.1°C), di-sec-butylperoxydicarbonate (1 minute half-life temperature: 92.4°C), t-butyl peroxyneodecanoate (1 minute half-life temperature: 103.5°C), t-hexylperoxypivalate (1 minute half-life temperature: 109.1°C), t-butylperoxypivalate (1 minute half-life temperature: 110.3°C), dilauroyl peroxide (1 minute half-life temperature: 116.4°C), di-n-octanoyl peroxide (1 minute half-life temperature: 117.4°C), 1,1,3,3-tetramethylbutylperoxy-2-ethylhexanoate (1 minute half-life temperature: 124.3°C), di(4-methylbenzoyl)peroxide (1 minute half-life temperature: 128.2°C), dibenzoyl peroxide (1 minute half-life temperature: 130.0°C), t-butyl peroxyisobutylate (1 minute half-life temperature: 136.1°C), 1,1-di(t-hexylperoxy) cyclohexane (1 minute half-life temperature: 149.2°C), and the like. Among others, di(4-t-butylcyclohexyl)peroxydicarbonate (1 minute half-life temperature: 92.1°C), dilauroyl peroxide (1 minute half-life temperature: 116.4°C), dibenzoyl peroxide (1 minute half-life temperature: 130.0°C), and the like are preferably used because of their particularly outstanding cross-linking reaction efficiencies.

The half-life of a peroxide is an index of the decomposition rate of the peroxide, and refers to the time required for the remaining amount of peroxide to be reduced to half. The decomposition temperature for achieving a half-life in a given period of time, and the half-life time at a given temperature, are described in manufacturers' catalogs, for example, "Organic Peroxides Catalog 9th Edition (May 2003)" by Nichiyu Co.

Each peroxide may be used alone, or two or more of them may be used in a mixture. The blended amount of the peroxide is, with respect to 100 mass parts of a (meth)acrylic polymer, 0.02 mass parts or more and yet 2 mass parts or less, and preferably 0.05 mass parts or more and yet 1 mass part or less. It is to be appropriately adjusted within this range for adjusting processibility, reworkability, cross-linking stability, and releasability.

The amount of decomposition of the peroxide remaining after the reaction treatment can be measured by HPLC (high performance liquid chromatography) or other methods, for example.

More specifically, for example, the tackiness agent after the reaction treatment may be taken in about 0.2 g aliquots, immersed in 10 ml of ethyl acetate and extracted by shaking for 3 hours at 120 rpm under 25°C in a shaking machine, and left at room temperature for 3 days. Then, 10 ml of acetonitrile may be added, and a liquid extract obtained by shaking at 120 rpm for 30 minutes at 25°C and filtered through a membrane filter (0.45 μm) may be injected in HPLC, and analyzed to determine the amount of peroxide after the reaction treatment.

Organic cross-linking agents and multifunctional metal chelates may also be used as cross-linking agents. A multifunctional metal chelate is a multivalent metal covalently or coordinately bonded to an organic compound. The multivalent metal atoms include Al, Cr, Zr, Co, Cu, Fe, Ni, V, Zn, In, Ca, Mg, Mn, Y, Ce, Sr, Ba, Mo, La, Sn, Ti, and so on. Examples of atoms in the organic compound to which to covalently or coordinately bonded are oxygen atoms, etc.; and examples of organic compounds are alkyl esters, alcohol compounds, carboxylic acid compounds, ether compounds, and ketone compounds, etc.

The blended amount of active energy ray-curable resin is e.g. 3 mass parts or more and yet 60 mass parts or less with respect to 100 mass parts of a (meth)acrylic polymer. The weight average molecular weight (Mw) before curing is not less than 4000 and not more than 50000. For example, acrylatebased, epoxy-based, urethane-based, or en-thiol-based UV-curable resins can be suitably used as the active energy ray-curable resin.

As the active energy ray-curable resin, monomers and/or oligomers that undergo radical polymerization or cationic polymerization with active energy rays are used.

Examples of monomers that undergo radical polymerization by active energy rays are monomers having unsaturated double bonds such as (meth)acryloyl groups and vinyl groups, and monomers having (meth)acryloyl groups are especially preferably used due to their good reactivity.

Specific examples of monomers having (meth)acryloyl groups are allyl (meth)acrylate, caprolactone (meth)acrylate, cyclohexyl (meth)acrylate, N,N-diethylaminoethyl (meth)acrylate, 2-ethylhexyl (meth)acrylate, heptadecafluorodecyl (meth)acrylate, glycidyl (meth)acrylate, caprolactone modified 2-hydroxylethyl (meth)acrylate, isobornyl (meth)acrylate, morpholine (meth)acrylate, (meth)acrylate, phenoxy ethyl (meth)acrylate, tripropylene glycol di(meth)acrylate, bisphenol A diglycidyl ether di(meth)acrylate, neopentyl glycol hydroxypivalate di(meth)acrylate, trimethylolpropane tri(meth)acrylate, trimethylolpropane ethoxy tri(meth)acrylate, pentaerythritol tri(meth)acrylate, pentaerythritol tetra(meth)acrylate, dipentaerythritol penta(meth)acrylate, dipentaerythritol hexa(meth)acrylate, caprolactone modified dipentaerythritol hexa (meth)acrylate, and the like.

As oligomers to undergo radical polymerization by active energy rays, polyester (meth)acrylate, epoxy (meth)acrylate, urethane (meth)acrylate, etc., to which two or more unsaturated double bonds, such as (meth)acryloyl groups or vinyl groups, are added as functional groups similar to those of monomers to the polyester, epoxy, urethane, etc. skeleton, are used.

Polyester (meth)acrylate is obtained by allowing a polyester with a terminal hydroxyl group obtained from a polyalcohol and a polycarboxylic acid to react with (meth)acrylic acid. Specific examples include the Aronix M-6000, 7000, 8000, and 9000 series manufactured by TOAGOSEI CO., LTD.

Epoxy (meth)acrylate is obtained by allowing an epoxy resin to react with (meth)acrylic acid. Specific examples are Ripoxy SP, VR series manufacture by Showa Polymer Co. and Epoxy Ester series manufactured by Kyoeisha Chemical Co.

Urethane (meth)acrylate is obtained by allowing polyol, isocyanate, and hydroxy (meth)acrylate to react. Specific examples are Artresin UN series made by Negami Chemical Industrial Co., Ltd., Shin Nakamura Chemical Co. NK Oligo U series, Shikoh UV series made by Mitsubishi Chemical Corporation, and others.

Through ultraviolet irradiation, a photopolymerization initiator is excited and activated to generate radicals, and acts to cure multifunctional oligomers via radical polymerization. Examples are: acetophenone-based photopolymerization initiators, such as 4-phenoxydichloroacetophenone, 4-t-butyldichloroacetophenone, diethoxyacetophenone, 2-hydroxy-2-methyl-1-phenylpropane-1-one, 1-(4-isopropylphenyl)-2-hydroxy-2-methylpropane-1-one, 1-(4-dodecylphenyl)-2-hydroxy-2-methylpropane-1-one, 4-(2-hydroxyethoxy)phenyl (2-hydroxy-2-propyl)ketone, and 1-hydroxycyclohexylphenyl ketone, 2-methyl-1-[4-(methylthio)phenyl]-2-morpholinopropane-1; benzoin-based photopolymerization initiators, such as benzoin, benzoin methyl ether, benzoin ethyl ether, benzoin isopropyl ether, benzoin isobutyl ether, and 2,2-dimethoxy-2-phenylacetophenone; benzophenone-based photopolymerization initiators, such as benzophenone, benzoyl benzoate, methyl benzoyl benzoate, 4-phenyl benzophenone, hydroxy benzophenone, 4-benzoyl-4'-methyldiphenylsulfide, and 3,3'-dimethyl-4-methoxybenzophenone; thioxanthone-based photopolymerization initiators, such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone; and specialized photopolymerization initiators, such as $\alpha$-acyloxime esters, acylphosphine oxide, methylphenylglyoxylate, benzyl, camphorquinone, dibenzosuberone, and 2-ethylanthraquinone, 4',4"-diethylisophthalophenone, etc. As the photopolymerization initiator, photocationic polymerization initiators can also be used, such as allylsulfonium hexafluorophosphate salts, sulfonium hexafluorophosphate salts, and bix(alkylphenyl) iodonium hexafluorophosphate.

Two or more of the above photopolymerization initiators can be used in combination. The polymerization initiator is usually blended in the range of 0.5 mass parts or more and yet 30 mass parts or less, and preferably in the range of 1 mass part or more and yet 20 mass parts or less, for 100 mass parts of the above active energy ray-curable resin. If less than 0.5 mass parts, polymerization does not progress sufficiently and the rate of curing may become slow; if more than 30 mass parts, the hardness of the cured sheet may decrease, or other problems may occur.

Active energy rays are not particularly limited, but preferably are ultraviolet, visible light, and electron beams, etc. Cross-linking treatment by UV irradiation can be performed using an appropriate ultraviolet source such as highpressure mercury lamps, low-pressure mercury lamps, excimer lasers, metal halide lamps, and LED lamps. The ultraviolet irradiation dose can be selected according to the required degree of cross-linking, but usually, in the case of ultraviolet, it is desirably chosen in the range of not less than 0.2 J/cm$^2$ and not more than 10 J/cm$^2$. The temperature during irradiation is not particularly limited, but it is preferably up to about 140°C in terms of heat resistance of the supporting body.

Next, with reference to FIGS. **3** to **5,** optical stacks **100B** and **101B** according to another embodiment of the present invention will be described. For component elements having substantially the same functions as those of the above embodiment, the description of the above embodiment applies unless otherwise specified. The optical stack **100B** functions as a light distribution control element as described in Patent Document 2, and can be manufactured by roll-to-roll method. The entire disclosure of Patent Document 2 is incorporated herein by reference.

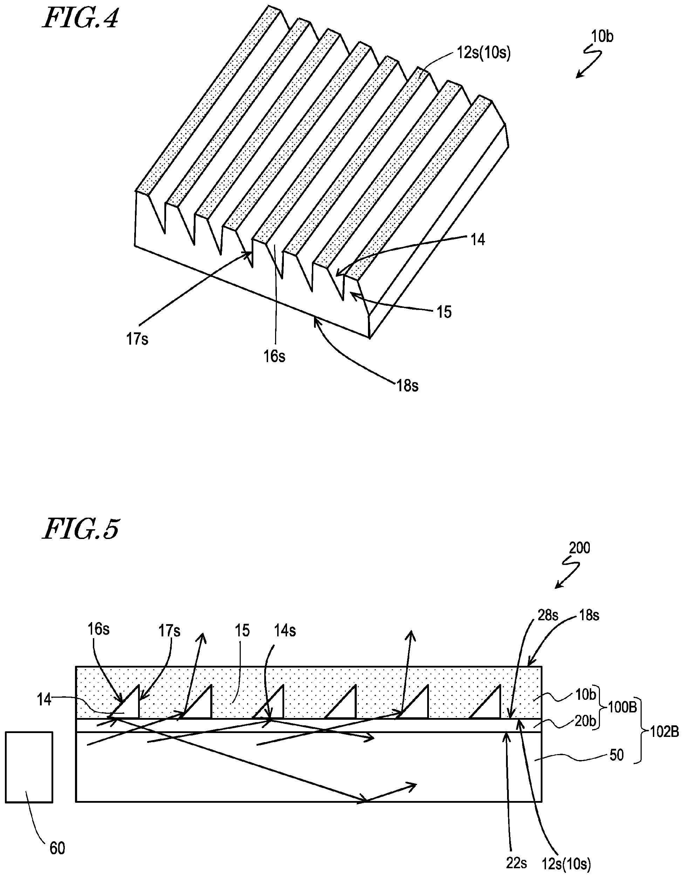

FIG. 3 shows a schematic cross-sectional view of the optical stacks **100B** and **101B,** representing a state in which a first optical sheet **10b** is adhesively bonded to a surface 38s of a second optical sheet 30 through an adhesive layer 20b. FIG. 4 is a schematic perspective view of the first optical sheet **10b** of the optical stack **100B**. FIG. 5 is a schematic cross-sectional view of an illumination device 200 having an optical stack **102B** and a light source **60,** and schematically shows the trajectory of light rays.

See FIG. **3** and FIG. **4.** The optical stack **100B** includes: a first optical sheet **10b** that includes a first principal face **12s** having a concavo-convex structure and a second principal face **18s** being opposite to the first principal face **12s;** and an adhesive layer **20b** disposed on the first principal face **12s** of the first optical sheet **10b**. The optical stack **101B** includes: the optical stack **100B;** and the second optical sheet **30,** which is disposed on an opposite side of the adhesive layer **20a** from the first optical sheet **10b**. Herein, the concavo-convex structure possessed by the first principal face **12s** of the optical sheet **10b** includes a plurality of dents **14,** such that the surface of the adhesive layer **20b** and the first principal face **12s** of the optical sheet **10b** define a plurality of spaces **14** (indicated by the same reference numeral as the dents) within the plurality of dents **14**. The adhesive layer **20b** is an essential component element for defining the spaces **14** in the optical stack **100B,** and is a part of the optical stack **100B.**

The concavo-convex structure possessed by the optical sheet **10b** includes flat portions **10s** which are in contact with the adhesive layer **20b**. The concavo-convex structure includes, for example, a plurality of bumps **15** having a trapezoidal cross-section. Because the concavo-convex structure includes flat portions **10s** being in contact with the adhesive layer **20b,** the concavo-convex structure of the optical sheet **10b** is less likely to allow the adhesive layer **20b** to penetrate into the dents than does the concavo-convex structure of the prism surface of the prism sheet **10a** shown in FIG. **1.** Therefore, by using the aforementioned adhesive, an optical stack **100B** can be obtained such that the adhesive layer **20b** does not penetrate into the plurality of spaces **14,** without change over time.

The optical sheet **10b** can be produced by using similar materials to known prism sheets or microlens sheets and by similar methods. The size and shape of the concavo-convex structure of the optical sheet **10b** may be changed as necessary (Patent Document 2). However, as mentioned above, the optical sheet **10b** differs from known prism sheets or microlens sheets in that it needs to be adhesively bonded to the adhesive layer **20b** in order to be able to function as an optical stack **100B** in which the spaces **14** are defined.

As shown in FIG. **3,** in the optical stack **101B,** the second optical sheet **30** is disposed so as to be adhesively bonded at its surface **38s** to a surface **22s** of the adhesive layer **20b**. As the material composing the second optical sheet **30,** any suitable material may be adopted depending on the purpose. The material of the second optical sheet **30** may for example be a light-transmitting thermoplastic resin, and more specifically a film made of a (meth) acrylic resin such as polymethyl methacrylate (PMMA), or a polycarbonate (PC)-based resin.

The spaces **14** in the optical stack **100B** are defined by the surface **16s** and the surface **17s,** which are portions of the first principal face **12s** of the optical sheet **10b,** and by the surface **28s** of the adhesive layer **20b**. Although an example is illustrated where the surface **16s** is slanted (greater than 0° and less than 90°) with respect to the sheet plane (horizontal direction in the figure) and the surface 17s is essentially perpendicular to the sheet plane, this is not a limitation, and various modification are possible (see Patent Document 2).

The optical stack **100B** is used in the illumination device **200,** for example, as shown in FIG. **5.** On an opposite side of the adhesive layer **20b** of the optical stack **100B** from the first optical sheet **10b,** a light guide plate **50** is provided. The optical stack **100B** and the light guide plate **50** are collectively referred to as the optical stack **102B**. The optical stack **102B** is adhesively bonded to the light guide plate **50** at the surface **22s** of the adhesive layer **20b** of the optical stack **100B.** A light-receiving surface of the light guide plate **50** is arranged so that light from a light source (e.g., an LED) **60** is incident thereon. As indicated by arrows in FIG. **5,** rays which are guided into the light guide plate **50** undergo total reflection (TIR) at interfaces **16s** and interfaces **14s** created by the spaces **14**. The rays which are totally reflected at the interfaces **14s** (the surface **28s** of the adhesive layer **20b)** are guided within the light guide plate **50** and the adhesive layer **20b,** whereas the rays which are totally reflected at the slopes **16s** are emitted to the outside through the surface **18s** of the optical stack **100B.** By adjusting the shape, size, density of placement, etc., of the spaces **14,** the distribution of rays emitted from the optical stack **100B** (intensity distribution) can be adjusted. Note that the refractive indices of the light guide plate **50,** the adhesive layer **20b,** and the optical sheet **10b** are preferably equal to one another.

Although FIG. **3** to FIG. **5** illustrate examples where the bumps **15** have a trapezoidal cross-sectional shape, the shape of the bumps **15** is not limited what is illustrated in the figures, and various modifications are possible. By adjusting the shape, size, and the like of the bumps **15,** the shape, size, density of placement, and the like of the spaces **14** can be adjusted. For example, International Publication No. 2011/124765 describes an example of a multilayered body having a plurality of internal spaces. The entire disclosure of International Publication No. 2011/124765 is incorporated herein by reference.

Hereinafter, experimental examples (Examples and Comparative Examples) will be described.

[Example 1]

(preparation of adhesive composition solution)

First, an acrylic polymer was prepared. By using a four-necked flask equipped with stirring blades, a thermometer, a nitrogen gas inlet tube, and a cooler, 62.9 mass parts of n-butyl acrylate (BA), 33.9 mass parts of 4-acryloyl morpholine (ACMO), 2.9 mass parts of acrylic acid (AA), 0.3 mass parts of 4-hydroxybutyl acrylate (4HBA), and 0.1 mass parts of 2,2'-azobisisobutyronitrile as a polymerization initiator were placed in the flask together with ethyl acetate, so that the total of monomers was 50 mass%. After nitrogen replacement for 1 hour by introducing nitrogen gas with gentle stirring, the liquid temperature in the flask was kept at around 58°C and the polymerization reaction was carried out for 8 hours, whereby an acrylic polymer was obtained. After 2 hours had elapsed from the start of the polymerization reaction, ethyl acetate was added dropwise over 3 hours to bring the solid content to 35 mass%. In other words, the acrylic polymer was obtained as an acrylic polymer solution with a solid content of 35 mass%.

Then, in the resultant acrylic polymer solution, with respect to 100 mass parts of the polymer, 7 mass parts in solid content of a UV-curable urethane acrylate resin A (weight average molecular weight Mw: 5,500), 0.7 mass parts of 2,2-dimethoxy-1,2-diphenylethane-1-one (product name: "Omnirad651", manufactured by IGM Japan, Inc.) as a photopolymerization initiator, and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent were blended, thereby preparing an adhesive composition solution.

(preparation of adhesive sheet)

On one side of a polyethylene terephthalate (PET) film (product name: "MRF38", manufactured by Mitsubishi Chemical Corporation) having a thickness of 38 $\mu$m and having been silicone release-treated, an adhesive composition solution was applied to form an adhesive composition solution layer. The application was performed so that the adhesive composition solution layer had a thickness after drying (i.e., thickness of the adhesive composition layer) of 1 $\mu$m. By drying the adhesive composition solution layer at 150°C for 3 minutes, the solvent in the adhesive composition solution layer was removed, and the acrylic polymer was cross-linked by the cross-linking agent, whereby an adhesive composition layer having the first cross-linked structure was obtained. Next, the release-treated surface of a polyethylene terephthalate (PET) film (product name: "MRE38", manufactured by Mitsubishi Chemical Corporation) having a thickness of 38 $\mu$m and having been silicone release-treated was attached onto the adhesive composition layer, thereby producing an adhesive sheet (first multilayered body) having a layered structure of PET film/adhesive composition layer/PET film.

(preparation of optical stack)

From the resultant adhesive sheet (first multilayered body), one of the release-treated PET films was peeled off, and the surface of the exposed adhesive composition layer was attached onto an acrylic resin film (thickness: 20 $\mu$m), and the other separator (PET film) was further peeled off. This was attached to the prism surface of a prism sheet having bumps and dents with a pitch of 10 $\mu$m and a height of 5.0 $\mu$m (manufactured by Nippon Tokushu Kogaku Jushi K.K., product number "LPV90-0.01S"), whereby a multilayered body (second multilayered body) having a layered structure of acrylic resin film/adhesive composition layer/prism sheet (optical sheet) was obtained.

Next, this second multilayered body was irradiated with ultraviolet through the upper surface (i.e., the acrylic resin film side) of the second multilayered body to cure the curable resin in the adhesive composition layer, thereby forming an adhesive layer having the second cross-linked structure in addition to the first cross-linked structure. Thus, an optical stack (third multilayered body) of Example 1, having a layered structure of acrylic resin film/adhesive layer/prism sheet (optical sheet), was obtained. Ultraviolet irradiation was performed with an LED lamp (manufactured by Quark Technology Inc., peak illuminance: 200 mW/cm$^2$, cumulative light amount: 1500 mJ/cm$^2$ (wavelength: 345 to 365 nm)), where the ultraviolet illuminance was measured by using a UV Power Puck (manufactured by Fusion UV Systems Japan, Inc.).

[Example 2]

Example 2 differs from Example 1 in that, in the preparation of the adhesive composition solution, the following was blended to an acrylic polymer solution prepared similarly to Example 1, with respect to 100 mass parts of the polymer: 30 mass parts in solid content of a UV-curable urethane acrylate resin (product name: "Shikoh UV-7610B"(weight average molecular weight Mw:11,000), manufactured by Mitsubishi Chemical Corporation) as a UV-curable resin; 3.0 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Example 3]

Example 3 differs from Example 1 in that, in the preparation of the adhesive composition solution, the following was blended to an acrylic polymer solution prepared similarly to Example 1, with respect to 100 mass parts of the polymer: 5 mass parts in solid content of a UV-curable urethane acrylate resin A as a UV-curable resin; 0.5 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Example 4]

Example 4 differs from Example 1 in that, in the preparation of the adhesive composition solution, the following was blended to an acrylic polymer solution prepared similarly to Example 1, with respect to 100 mass parts of the polymer: 9 mass parts in solid content of a UV-curable urethane acrylate resin A as a UV-curable resin; 0.9 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Example 5]

Example 5 differs from Example 1 in that, in the preparation of the acrylic polymer, n-butyl acrylate, 4-acryloyl morpholine, acrylic acid, and 4-hydroxybutyl acrylate were added in, respectively, 58.1 mass parts/38.7 mass parts/2.9 mass parts/0.3 mass parts. Furthermore, it differs from Example 1 in that, in the preparation of the adhesive composition solution, the following was blended to the resultant acrylic polymer solution, with respect to 100 mass parts of the polymer: 5 mass parts in solid content of a UV-curable urethane acrylate resin A as a UV-curable resin; 0.5 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Example 6]

Example 6 differs from Example 1 in that, in the preparation of the acrylic polymer, n-butyl acrylate, 4-acryloyl morpholine, acrylic acid, and 4-hydroxybutyl acrylate were added in, respectively, 67.8 mass parts/29.0 mass parts/2.9 mass parts/0.3 mass parts. Furthermore, it differs from Example 1 in that, in the preparation of the adhesive composition solution, the following was blended to the resultant acrylic polymer solution, with respect to 100 mass parts of the polymer: 30 mass parts in solid content of a UV-curable urethane acrylate resin (product name: "Shikoh UV-7610B", manufactured by Mitsubishi Chemical Corporation, weight average molecular weight Mw:11,000) as a UV-curable resin; 3.0 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Example 7]

(preparation of adhesive composition solution)

Example 7 differs from Example 1 in that, in the preparation of the acrylic polymer, n-butyl acrylate, 4-acryloyl morpholine, acrylic acid, and 4-hydroxybutyl acrylate were added in, respectively, 74.6 mass parts/18.6 mass parts/6.5 mass parts/0.3 mass parts. Furthermore, it differs from Example 1 in that, in the preparation of the adhesive composition solution, the following was blended to the resultant acrylic polymer solution, with respect to 100 mass parts of the polymer: 10 mass parts in solid content of a UV-curable urethane acrylate resin A as a UV-curable resin; 1.0 mass part of 4-(2-hydroxyethoxy)phenyl (2-hydroxy-2-propyl)ketone (product name: "Omnirad2959", manufactured by IGM Japan, Inc.)

as a photopolymerization initiator; and 0.6 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

(preparation of adhesive sheet)

This was performed similarly to Example 1.

(preparation of optical stack)

This was performed similarly to Example 1.

[Example 7a]

Except for using the concavo-convex textured film 70 below as the optical sheet, an optical stack of Example 7a having a layered structure of acrylic resin film/adhesive layer/optical sheet (concavo-convex textured film) was produced similarly to Example 7.

(production of concavo-convex textured film)

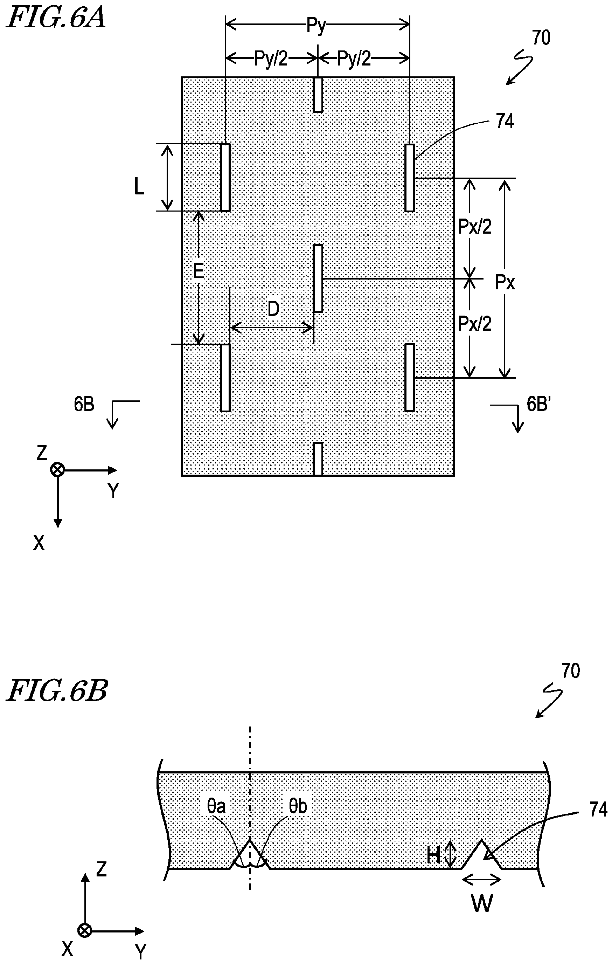

A concavo-convex textured film was produced according to a method described in Japanese National Phase PCT Laid-Open Publication No. 2013-524288. Specifically, the surface of a polymethyl methacrylate (PMMA) film was coated with a lacquer (manufactured by Sanyo Chemical Co., FINECURE RM-64); an optical pattern was embossed on the film surface including the lacquer; and thereafter the lacquer was cured to produce the concavo-convex textured film of interest. The concavo-convex textured film had a total thickness of 130 $\mu$m, and a haze of 0.8%. FIG. 6A shows a plan view of a portion of the resultant concavo-convex textured film **70** as viewed from the concavo-convex surface side. FIG. **6B** shows a cross-sectional view of the concavo-convex textured film at **6B-6B'** in FIG. **6A.** A plurality of dents **74** having a length **L** of 80 $\mu$m, a width **W** of 14 $\mu$m, and a depth **H** of 10 $\mu$m and having a triangular cross-section were disposed at intervals of **E** (155 $\mu$m) along the X axis direction. Furthermore, patterns of such dents **74** were disposed at intervals **of D** (100 $\mu$m) along the Y axis direction. The dents **74** had a density of 3612/cm$^2$ on the concavo-convex textured film surface. In FIG. **6B,** $\theta$**a** and $\theta$**b** were both 41°, and the dents **74** had a percentage footprint of 4.05% in a plan view of the film as seen from the concavo-convex surface side.

[Example 8]

Example 8 differs from Example 7 in that, in the preparation of the adhesive sheet (first multilayered body), the adhesive composition solution layer had a thickness after drying (i.e., thickness of the adhesive composition layer) of 10 $\mu$m. Otherwise it was performed similarly to Example 7.

[Example 8a]

Except for using the concavo-convex textured film 70 as the optical sheet, an optical stack of Example 8a having a layered structure of acrylic resin film/adhesive layer/optical sheet (concavo-convex textured film) was produced similarly to Example 8.

[Comparative Example 1]

(preparation of adhesive composition solution)

Comparative Example 1 differs from Example 1 in that, in the preparation of the acrylic polymer, n-butyl acrylate, 4-acryloyl morpholine, acrylic acid, and 4-hydroxybutyl acrylate were added in, respectively, 53.2 mass parts/43.6 mass parts/2.9 mass parts/0.3 mass parts. Furthermore, it differs from Example 1 in that the adhesive composition solution was prepared by only blending a cross-linking agent to the resultant acrylic polymer solution, while blending neither a UV-curable resin nor a photopolymerization initiator.

(preparation of adhesive sheet)

On one side of a polyethylene terephthalate (PET) film (product name: "MRF38", manufactured by Mitsubishi Chemical Corporation) having a thickness of 38 μm and having been silicone release-treated, an adhesive composition solution was applied to form an adhesive composition solution layer. The application was performed so that the adhesive composition solution layer had a thickness after drying (i.e., thickness of the adhesive layer) of 1 μm. By drying the adhesive composition solution layer at 150°C for 3 minutes, the solvent in the adhesive composition solution layer was removed, and the acrylic polymer was cross-linked by the cross-linking agent, whereby an adhesive layer having a cross-linked structure was obtained.

In Example 1 described above, the adhesive composition solution contains an acrylic polymer, a cross-linking agent, a UV-curable resin, a photopolymerization initiator, and a solvent. In Example 1, by drying the adhesive composition solution layer made from the adhesive composition solution at 150°C for 3 minutes and cross-linking the acrylic polymer with the cross-linking agent, an adhesive composition layer having the first cross-linked structure is obtained, and thereafter the UV-curable resin in the adhesive composition layer is cured, whereby an adhesive layer having the second cross-linked structure in addition to the first cross-linked structure is formed. On the other hand, in Comparative Example 1, the adhesive composition solution contains neither a UV-curable resin nor a photopolymerization initiator. In Comparative Example 1, by drying the adhesive composition solution layer made from the adhesive composition solution at 150°C for 3 minutes and cross-linking the acrylic polymer with the cross-linking agent, an adhesive layer having a cross-linked structure is obtained.

Next, the release-treated surface of a polyethylene terephthalate (PET) film (product name: "MRE38", manufactured by Mitsubishi Chemical Corporation) having a thickness of 38 μm and having been silicone release-treated was attached onto the adhesive layer, thereby producing an adhesive sheet (first multilayered body) having a layered structure of PET film/adhesive layer/PET film.

(preparation of optical stack)

From the resultant adhesive sheet (first multilayered body), one of the release-treated PET films was peeled off, and the surface of the exposed adhesive layer was attached onto an acrylic resin film (thickness: 20 μm), and the other separator (PET film) was further peeled off. This was attached to the prism surface of a prism sheet (manufactured by Nippon Tokushu Kogaku Jushi K.K., product number "LPV90-0.01S") having bumps and dents with a pitch of 10 μm, a height of 5.0 μm, whereby a multilayered body (second multilayered body) having a layered structure of acrylic resin film/adhesive layer/prism sheet (optical sheet) was obtained. This second multilayered body was designated the optical stack of Comparative Example 1.

[Comparative Example 2]

Comparative Example 2 differs from Comparative Example 1 in that, in the preparation of the acrylic polymer, n-butyl acrylate, 4-acryloyl morpholine, acrylic acid, and 4-hydroxybutyl acrylate were added in, respectively, 58.1 mass parts/38.7 mass parts/2.9 mass parts/0.3 mass parts. Otherwise it was performed similarly to Comparative Example 1.

[Comparative Example 3]

Comparative Example 3 differs from Example 1 in that, in the preparation of the acrylic polymer, n-butyl acrylate, 4-acryloyl morpholine, acrylic acid, and 4-hydroxybutyl acrylate were added in, respectively, 67.8 mass parts/29.0 mass parts/2.9 mass parts/0.3 mass parts. Furthermore, it differs from Example 1 in that, in the preparation of the adhesive composition solution, the following was blended to the resultant acrylic polymer solution, with respect to 100 mass parts of the polymer: 30 mass parts in solid content of a UV-curable urethane acrylate resin (product name: "Shikoh UV-1700B", manufactured by Mitsubishi Chemical Corporation, weight average molecular weight Mw: 2,000) as a UV-curable resin; 3.0 mass parts of 2,2-dimethoxy-1,2-diphenylethane-1-one (product name: "Omnirad651", manufactured by IGM Japan, Inc.) as a photopolymerization initiator; and 0.1 mass parts of 1,3-bis(N,N-diglycidylaminomethyl) cyclohexane (product name: "TETRAD-C", manufactured by Mitsubishi Gas Chemical Company, Inc.) as a cross-linking agent. Otherwise it was performed similarly to Example 1.

[Comparative Example 4]

Comparative Example 4 differs from Comparative Example 1 in that, in the preparation of the acrylic polymer, n-butyl acrylate, 4-acryloyl morpholine, acrylic acid, and 4-hydroxybutyl acrylate were added in, respectively, 77.4 mass parts/19.4 mass parts/2.9 mass parts/0.3 mass parts. Otherwise it was performed similarly to Comparative Example 1.

[Comparative Example 5]

Comparative Example 5 differs from Comparative Example 1 in that, in the preparation of the acrylic polymer, n-butyl acrylate, 4-acryloyl morpholine, acrylic acid, and 4-hydroxybutyl acrylate were added in, respectively, 92.0 mass parts/4.8 mass parts/2.9 mass parts/0.3 mass parts. Otherwise it was performed similarly to Comparative Example 1.

Evaluations were made as follows for the optical stacks of Examples 1 to 8 and Comparative Examples 1 to 5. Results of evaluation are shown in Table 1.

<evaluation of gel fraction>

For each of Examples 1 to 8 and Comparative Example 3, about 0.1 g was taken from the adhesive composition layer of the adhesive sheet (first multilayered body) before curing the curable resin. This was wrapped in a porous tetrafluoroethylene sheet (product name: "NTF1122", manufactured by Nitto Denko Corporation) having an average pore diameter 0.2 $\mu$m, and thereafter tied with a kite string (referred to as "Test Sample A"). The mass of this was measured (defined as mass before immersion (W2)). The mass before immersion (W2) is an overall mass including the adhesive composition, the porous tetrafluoroethylene sheet, and the kite string. The total mass of the porous tetrafluoroethylene sheet and the kite string was also separately measured (defined as tare mass (W1)).

Next, Test Sample A was placed in a 50 mL container filled with ethyl acetate, and left at 23°C for 7 days. Thereafter, Test Sample A (after ethyl acetate treatment) was taken out of the container, placed in an aluminum cup, and was dried at 130°C for 2 hours in a dryer to remove ethyl acetate, after which the mass of Test Sample A was measured (defined as mass after immersion (W3)). A gel fraction was calculated from the following equation.

$$\texttt{gel fraction (\%(mass \%))=(W3-W1)}\times\texttt{100/(W2-W1)}$$

Also, for each of Examples 1 to 8 and Comparative Example 3, the adhesive sheet (first multilayered body) before curing the curable resin was irradiated with ultraviolet to cure the UV-curable resin in the adhesive composition layer and to form an adhesive layer, whereby an adhesive sheet (fourth multilayered body) having a layered structure of PET film/adhesive layer/PET film was obtained. About 0.1 g was taken from the adhesive layer of each adhesive sheet (fourth multilayered body), and this was wrapped in a porous tetrafluoroethylene sheet (product name: "NTF1122", manufactured by Nitto Denko Corporation) having an average pore diameter 0.2 $\mu$m and thereafter tied with a kite string (referred to as "Test Sample B"). By using this, with a similar method to the above, the gel fraction after curing the curable resin in the adhesive composition was also evaluated. Ultraviolet irradiation was performed with an LED lamp (manufactured by Quark Technology Inc., peak illuminance: 200 mW/cm$^2$, cumulative light amount: 1500 mJ/cm$^2$ (wavelength: 345 to 365 nm)), where the ultraviolet illuminance was measured by using a UV Power Puck (manufactured by Fusion UV Systems Japan, Inc.).

For Comparative Examples 1, 2, 4 and 5, in which adhesive compositions not containing any curable resin were used, about 0.1 g was taken from the adhesive layer of each adhesive sheet (first multilayered body) and this was wrapped in a porous tetrafluoroethylene sheet (product name: "NTF1122", manufactured by Nitto Denko Corporation) having an average pore diameter 0.2 $\mu$m, and thereafter tied with a kite string (referred to as "Test Sample C"). By using this, similar evaluations were made.

<evaluation of initial tensile modulus of elasticity of adhesive composition>

For each of Examples 1 to 8 and Comparative Example 3, similarly to the aforementioned adhesive sheet (first multilayered body), but with the adhesive composition layer having a thickness of 10 $\mu$m, an adhesive sheet (fifth multilayered body) having a layered structure of PET film/adhesive composition layer (thickness: 10 $\mu$m)/PET film was produced. From the adhesive sheet (fifth multilayered body), a test piece sized 30 mm wide and 60 mm long was cut out; one of the release-treated PET films was peeled off; and the exposed adhesive composition layer was rounded into a cylindrical shape with a cross-sectional area of about 0.6 mm$^2$, thus producing a sample for measurement.

For each of Comparative Examples 1, 2, 4 and 5, similarly to the aforementioned adhesive sheet (first multilayered body), but with the adhesive layer having a thickness of 10 $\mu$m, an adhesive sheet (sixth multilayered body) having a layered structure of PET film/adhesive layer (thickness: 10 $\mu$m)/PET film was produced. From the adhesive sheet (sixth multilayered body), a test piece sized 30 mm wide and 60 mm long was cut out; one of the release-treated PET films was peeled off; and the exposed adhesive layer was rounded into a cylindrical shape with a cross-sectional area of about 0.6 mm$^2$, thus producing a sample for measurement.

In a measurement environment at 23°C and 65%RH, the aforementioned cylindrical-shaped sample for measurement was set in a tensile/compression tester (machine name: "AGS-50NX", manufactured by Shimadzu Corporation).

Under the conditions that the chuck interval was 10 mm and the drawing rate was 50 mm/minute, the amount of change (mm) responsive to an elongation along the axial direction of the above cylinder was measured. In an S-S (Strain-Strength) curve obtained from this, an initial tensile modulus of elasticity Eo of the adhesive composition was defined as $E_0 = (\sigma_2 - \sigma_1)/(\varepsilon_2 - \varepsilon_1)$, where $\sigma 1$ and $\sigma 2$ were the tensile stresses corresponding to respective tensile strains at two points ($\varepsilon_1 = 5\%$ and $\varepsilon_2 = 10\%$). Herein, the tensile strain $\varepsilon$ was calculated based on the chuck interval.

$$E = (L_1 - L_0) / L_0$$

or

$$\varepsilon(\%) = 100 \times (L_1 - L_0) / L_0$$

$\varepsilon$: tensile strain (dimensionless ratio or %)
$L_0$: initial chuck interval (mm)
$L_1$: chuck interval after elongation (mm)
the tensile stress $\sigma$ is calculated based on a cross-sectional area of the test piece before elongation.

$$\sigma = F / A$$

$\sigma$: tensile stress (MPa)
F: measuring load (N)
A: cross-sectional area of test piece before elongation ($mm^2$)

For each of Examples 1 to 8 and Comparative Example 3, similar evaluations were made by using adhesive sheets having an adhesive composition layer whose curable resin had been cured, and also an initial tensile modulus of elasticity (i.e., initial tensile modulus of elasticity of the adhesive layer) of the adhesive composition after curing its curable resin by ultraviolet irradiation was evaluated. Specifically, after the above adhesive sheet (fifth multilayered body) was produced, the fifth multilayered body was irradiated with ultraviolet to cure the UV-curable resin in the adhesive composition layer, whereby an adhesive sheet (sixth multilayered body) having a layered structure of PET film/adhesive layer (thickness: 10 $\mu$m)/PET film was obtained. From the adhesive sheet (sixth multilayered body) whose curable resin had been cured, test pieces sized 20 mm wide and 60 mm long were cut out, and designated as samples for measurement. Their amounts of change (mm) responsive to an elongation along the longitudinal direction were measured, and an initial tensile modulus of elasticity was found. Ultraviolet irradiation for the fifth multilayered body was performed with an LED lamp (manufactured by Quark Technology Inc., peak illuminance: 200 mW/cm$^2$, cumulative light amount: 1500 mJ/cm$^2$ (wavelength: 345 to 365 nm)), where the ultraviolet illuminance was measured by using a UV Power Puck (manufactured by Fusion UV Systems Japan, Inc.).

<180° peel adhesive strength with respect to polymethyl methacrylate (PMMA)>

For each of Comparative Examples 1, 2, 4 and 5, one of the release-treated PET films was peeled off from the adhesive sheet (first multilayered body), and the exposed surface of the adhesive layer was attached onto a polyethylene terephthalate (PET) film (product name: "Lumirror S-10", manufactured by Toray Industries, Inc.) having a thickness of 25 $\mu$m. This was cut into 20 mm in width, and the other release-treated PET film was peeled off, and the exposed surface of the adhesive layer was attached onto a polymethyl methacrylate (PMMA) plate (product name: "Acrylite (Shinkolite)", manufactured by Mitsubishi Chemical Corporation). Using this as a test piece, an adhesive strength with respect to a PMMA plate (mN/20 mm) was measured.

The pressing when attaching together with a PMMA plate was achieved by moving a 2 kg roller in one back-andforth travel. After 30 minutes from attaching together, the 180° peel adhesive strength was measured under the following conditions, by using a tensile/compression tester (machine name: "AGS-50NX", manufactured by Shimadzu Corporation).

Peeling rate: 300 mm/minute
Measurement conditions: temperature: 23±2°C, humidity: 65±5%RH

For Examples 1 to 8 and Comparative Example 3, a 180° peel adhesive strength of the adhesive after curing its curable resin by ultraviolet irradiation was evaluated as follows. Test pieces were produced similarly to Comparative Examples 1, 2, 4 and 5 by using an adhesive sheet (first multilayered body), and after attaching them together with a PMMA plate (i.e., after obtaining a multilayered body of PET film (Lumirror S-10)/adhesive composition layer (before curing the UV-curable resin)/PMMA plate), ultraviolet irradiation was performed through the PET film, thereby producing the test pieces. Ultraviolet irradiation was performed with an LED lamp (manufactured by Quark Technology Inc., peak illuminance: 200 mW/cm$^2$, cumulative light amount: 1500 mJ/cm$^2$ (wavelength: 345 to 365 nm)), where the ultraviolet illuminance was measured by using a UV Power Puck(manufactured by Fusion UV Systems Japan, Inc.).

<haze evaluation>

Laminates of adhesive layers (thickness 80 $\mu$m) were produced as follows.

Examples 1 to 8 and Comparative Example 3: By a method similar to that of <evaluation of initial tensile modulus of elasticity of adhesive composition>, an adhesive sheet (sixth multilayered body) having a layered structure of PET film/adhesive layer (thickness 10 $\mu$m)/PET film was produced in a size that was 20 cm wide and 30 cm long. Eight test pieces were cut out of the resultant adhesive sheet (sixth multilayered body), and a laminate of adhesive layers (thickness 80 $\mu$m) was obtained in which 8 adhesive layers (thickness 10 $\mu$m) were stacked.

Comparative Examples 1, 2, 4 and 5: By a method similar to that of <evaluation of initial tensile modulus of elasticity of adhesive composition>, an adhesive sheet (sixth multilayered body) having a layered structure of PET film/adhesive layer (thickness 10 $\mu$m)/PET film was produced in a size that was 20 cm wide and 30 cm long. Eight test pieces were cut out of the resultant adhesive sheet (sixth multilayered body), and a laminate of adhesive layers (thickness 80 $\mu$m) was obtained in which 8 adhesive layers (thickness 10 $\mu$m) were stacked.

By attaching the laminate of adhesive layers (thickness 80 $\mu$m) obtained as described above to a silicone release-treated PET film, a multilayered body having a layered structure of PET film/laminate of adhesive layers (thickness 80 $\mu$m)/PET film was obtained. From the multilayered body having a layered structure of PET film/laminate of adhesive layers (thickness 80 $\mu$m) /PET film, one separator (PET film) was peeled off, and the laminate of adhesive layers was attached onto a glass plate (product name: "EAGLE XG", manufactured by Corning Inc., thickness: 0.7 mm), and the other separator was further peeled off, whereby a test piece having a layered structure of laminate of adhesive layers/glass plate was produced. The haze of the aforementioned test piece was measured by using a haze meter (machine name: "HZ-1", manufactured by Suga Testing Machinery Co.), with D65 light.

In the present specification, the "haze" of an adhesive layer is defined as a "haze" that is determined for a laminate of adhesive layers (thickness 80 $\mu$m) by the above-described method. The haze of a 80 $\mu$m thick laminate does not depend on the thickness of each adhesive layer composing the laminate.

<evaluation of diffuse transmittance>

The optical stack of each Example or Comparative Example was set in a haze meter (machine name: "HZ-1", manufactured by Suga Testing Machinery Co.) so that the acrylic resin film faced the light source, and its diffuse transmittance was measured with D65 light. A diffuse transmittance immediately after attachment (within 5 minutes)("diffuse transmittance (immediately after)" in Table 1) and diffuse transmittances 1 day and 5 days after attachment (stored at temperature: 23$\pm$2°C, humidity: 65$\pm$5%RH)("diffuse transmittance (1 day after)" and diffuse transmittance (5 days after)" in Table 1) were measured. The resultant diffuse transmittance was judged by the following criteria.

Diffuse transmittance immediately after attachment (within 5 minutes)

◎:96% or more
◦:95% or more but less than 96%
△:93% or more but less than 95%
×:less than 93%

diffuse transmittance 1 day after attachment

◎:95% or more
◦:88% or more but less than 95%
△:86% or more but less than 88%
×:less than 86%

diffuse transmittance 5 days after attachment

◎:90% or more

○:86% or more but less than 90%
△:85% or more but less than 86%
×:less than 85%

[Table 1]

| | acrylic polymer | UV-curable resin | | | gel frac-tion [%] | initial tensile modulus of elasticity [MPa] | adhesive strength to PMMA [mN/20mm] | haze [%] | thickness of adhe-sive layer [μm] | diffuse transmit-tance (immedia-tely after) [%] | | diffuse transmittance (after 1 day) [%] | | diffuse transmit-tance (after 5 days) [%] | |
| | | type | mass parts | | | | | | | | | | judgment | | 7 |
|---|---|---|---|---|---|---|---|---|---|---|---|---|---|---|---|
| Example 1 | BA/ACMO/AA/4HBA =62.9/33.9/2.9/0.3 | resin A | 7 | before curing | 86.3 | 2.89 | - | - | 1 | - | - | - | - | - | - |
| | | | | after curing | 91.2 | 4.53 | 70 | 1.3 | | 97.0 | ◎ | 95.3 | ◎ | 94.5 | ◎ |
| Example 2 | | Shikoh UV-7610B | 3C | before curing | 77.9 | 0.44 | - | - | 1 | - | - | - | - | - | - |
| | | | | after curing | 99.2 | 32.91 | 80 | 3.C | | 95.7 | ○ | 88.6 | ○ | 88.4 | ○ |
| Example 3 | | resin A | 5 | before curing | 84.2 | 2.22 | - | - | 1 | - | - | - | - | - | - |
| | | | | after curing | 97.1 | 4.76 | 90 | 1.3 | | 96.5 | ◎ | 89.3 | ○ | 86.9 | ○ |
| Example 4 | | resin A | 9 | before curing | 82.1 | 2.52 | - | - | 1 | - | - | - | - | - | - |
| | | | | after curing | 91.1 | 7.63 | 70 | 1.3 | | 96.3 | ◎ | 89.5 | ○ | 86.9 | ○ |
| Example 5 | BA/ACMO/AA/4HBA =58.1/38.7/2.9/0.3 | resin A | 5 | before curing | 86.C | 7.6C | - | - | 1 | - | - | - | - | - | - |
| | | | | after curing | 97.8 | 17.18 | 40 | 2.2 | | 96.8 | ◎ | 95.6 | ◎ | 93.4 | ◎ |
| Example 6 | BA/ACMO/AA/4HBA =67.8/29.0/2.9/0.3 | Shikoh UV-7610B | 3C | before curing | 75.8 | 0.54 | - | - | 1 | - | - | - | - | - | - |
| | | | | after curing | 97.1 | 11.11 | 11C | 1.8 | | 94.0 | △ | 88.6 | ○ | 88.1 | ○ |

(continued)

| | acrylic polymer | UV-curable resin | | | gel fraction [%] | initial tensile modulus of elasticity [MPa] | adhesive strength to PMMA [mN/20mm] | haze [%] | thickness of adhesive layer [μm] | diffuse transmittance (immediately after) [%] | | diffuse transmittance (after 1 day) [%] | | diffuse transmittance (after 5 days) [%] | |
|---|---|---|---|---|---|---|---|---|---|---|---|---|---|---|---|
| | | type | mass parts | | | | | | | | | | judgment | | 7 |
| Example 7 | BA/ACMO/AA/4HBA =74.6/18.6/6.5/0.3 | resin A | 10 | before curing | 90.1 | 1.24 | - | - | 1 | - | - | - | - | - | - |
| | | | | after curing | 95.0 | 3.3C | 385 | 0.7 | | 96.8 | ◎ | 96.0 | ◎ | 95.8 | ◎ |
| Example 8 | | resin A | 10 | before curing | 91.8 | 1.5C | - | - | 10 | - | - | - | - | - | - |
| | | | | after curing | 96.7 | 3.80 | 989 | 0.7 | | 95.3 | ○ | 92.9 | ○ | 90.8 | ◎ |
| Comparative Example 1 | BA/ACMO/AA/4HBA =53.2/43.6/2.9/0.3 | none | - | - | 91.1 | 294.39 | C | 1.0 | 1 | could not be attached together | | | | | |
| Comparative Example 2 | BA/ACMO/AA/4HBA =58.1/38.7/2.9/0.3 | none | - | - | 94.C | 8.37 | 60 | 0.8 | 1 | could not be attached together | | | | | |
| Comparative Example 3 | BA/ACMO/AA/4HBA =67.8/29.0/2.9/0.3 | Shikoh UV-1700B | 3C | before curing | 70.6 | 0.28 | - | - | 1 | - | - | - | - | - | - |
| | | | | after curing | 97.2 | 85.04 | 48C | 1.2 | | 90.7 | × | 82.8 | × | 82.6 | × |
| Comparative Example 4 | BA/ACMO/AA/4HBA =77.4/19.4/2.9/0.3 | none | - | - | 91.6 | 0.33 | 33C | 0.5 | 1 | 94.0 | △ | 87.1 | △ | 85.9 | △ |
| Comparative Example 5 | BA/ACMO/AA/4HBA =92.0/4.8/2.9/0.3 | none | - | - | 94.4 | 0.19 | 119C | 0.6 | 1 | 90.3 | × | 85.3 | × | 84.2 | × |

From the diffuse transmittance results for the optical stacks of Examples 1 to 8, it can be said that penetration of the adhesive composition layer into the dents of the optical sheet when attaching the adhesive composition layer onto the optical sheet and change over time in the degree of penetration of the adhesive layer into the dents are suppressed. The optical stacks of Examples 1 to 8 all have a diffuse transmittance immediately after attachment (within 5 minutes) of 94% or more, a diffuse transmittance 1 day after attachment of 88% or more, and a diffuse transmittance 5 days after attachment of 86% or more.

For the optical stacks of Examples 7a and 8a in which a concavo-convex textured film having a plurality of dents in its surface was used as the optical sheet, and 10 days after attaching the optical sheet and the adhesive composition layer together, a cross-section (a cross-section containing a cross-section of the concavo-convex textured film 70 in FIG. 6B) of the optical stacks of Examples 7a and 8a was observed with an optical microscope (manufactured by NIKON SOLUTIONS CO., LTD., ECLIPSE LV100) at a magnification of 1500x. For any of Examples 7a and 8a, it was confirmed from the observe image that there was substantially no penetration of the adhesive layer into the dents 74 of the concavo-convex textured film 70, and that change over time in the degree of penetration of the adhesive layer into the dents had been suppressed.

In the adhesive composition layers of all of Examples 1 to 8, the acrylic resin film and the optical sheet were able to be attached together. The results of Examples 1 to 8 indicate that, from the standpoint of softness (ease of deformation) required for the adhesive composition layer to be attached onto the prism surface or the concavo-convex surface of the optical sheet, a 23°C initial tensile modulus of elasticity before curing the curable resin in the adhesive composition layer is preferably 8.00 MPa or less, and more preferably 7.70 MPa or less. The results of Examples 1 to 8 also indicate that, from the standpoint of suppressing penetration of the adhesive composition layer into the dents of the optical sheet when attaching the adhesive composition layer onto the optical sheet and suppressing change over time in the degree of penetration of the adhesive layer into the dents, it is preferable that the 23°C initial tensile modulus of elasticity before curing the curable resin in the adhesive composition layer is 0.35 MPa or more and that the 23°C initial tensile modulus of elasticity after curing the curable resin is 1.00 MPa or more, and more preferable that the 23°C initial tensile modulus of elasticity before curing the curable resin in the adhesive composition layer is 0.40 MPa or more and that the 23°C initial tensile modulus of elasticity after curing the curable resin in the adhesive composition is 3.00 MPa or more.

In Examples 1 to 8 and Comparative Example 3, the thickness before curing the curable resin in the adhesive composition layer (i.e., thickness of the adhesive composition layer) and the thickness after curing the curable resin in the adhesive composition layer (i.e., thickness of the adhesive layer) were both 1 µm (or both 10 µm in Example 8), without changing.

Comparative Example 3 differs from Example 6 with respect to the type of UV-curable resin. While a UV-curable resin having a weight average molecular weight Mw:11,000 was used in Example 6, a UV-curable resin having a weight average molecular weight Mw:2,000 was used in Comparative Example 3. When the weight average molecular weight Mw of the UV-curable resin is too small as in Comparative Example 3, the elastic modulus before curing the curable resin in the adhesive composition is low, so that entry of the adhesive composition layer into the plurality of dents may not be sufficient suppressed. In the optical stack of Comparative Example 3, the diffuse transmittance immediately after attachment (within 5 minutes), the diffuse transmittance 1 day after attachment, and the diffuse transmittance 5 days after attachment were all lower than those of the optical stacks of Examples 1 to 8.

Comparative Examples 1, 2, 4 and 5 do not contain any UV-curable resin. Comparative Examples 1, 2, 4 and 5 only differ with respect to the mass ratio between n-butyl acrylate (BA), 4-acryloyl morpholine, and (ACMO) that were blended when preparing the (meth)acrylic polymer. In Comparative Example 1, BA:ACMO=55:45; in Comparative Example 2, BA:ACMO=60:40; in Comparative Example 4, BA:ACMO=80:20; and in Comparative Example 5, BA:ACMO=95:5. In Comparative Examples 1 and 2, the adhesive layer had a high initial tensile modulus of elasticity, so that the adhesive layer could not be attached to the acrylic resin film and/or prism sheet. In Comparative Examples 4 and 5, the adhesive layer had a low initial tensile modulus of elasticity, so that sufficient diffuse transmittance was not obtained.

The mass ratio between n-butyl acrylate (BA) and 4-acryloyl morpholine (ACMO) blended when preparing the (meth)acrylic polymer was: in Examples 1 to 4, BA:ACMO=65:35; in Example 5, BA:ACMO=60:40; in Example 6, BA:ACMO=70:30; and in Examples 7 and 8, BA:ACMO=80:20. Example 2 differs from Example 6 only with respect to the mass ratio between BA:ACMO. Examples 1, 3 and 4 differ from Example 2 with respect to the type and amount of UV-curable resin. Example 5 differs from Example 3 only with respect to the mass ratio between BA:ACMO. The adhesive composition preferably includes e.g. 5.0 mass% or more and yet 40.0 mass% or less of a nitrogen-containing vinyl monomer-derived component. The ratio of the ACMO-derived component with respect to the entire adhesive composition is as follows. Example 1: 31.4 mass%, Example 2: 25.5 mass%, Example 3: 32.1 mass%, Example 4: 30.8 mass%, Example 5: 36.6 mass%, Example 6: 21.8 mass%, Example 7: 16.7 mass%, Example 8: 16.7 mass%

## INDUSTRIAL APPLICABILITY

Optical stacks according to the present invention can be broadly used in optical devices, such as display devices or illumination devices.

## REFERENCE SIGNS LIST

**10a, 10b**     first optical sheet

| | |
|---|---|
| **12s, 18s** | principal face (surface) |
| **20a, 20b** | adhesive layer |
| **30** | second optical sheet |
| **32s, 38s** | principal face (surface) |
| **50** | light guide plate |
| **60** | light source |
| **100A, 100B, 101A, 101B, 102B** | optical stack |
| **200** | illumination device |

## Claims

1.  An adhesive composition layer made from an adhesive composition that includes: a polymer including a copolymer of at least one (meth)acrylate monomer and at least one copolymerizable functional group-containing monomer selected from the group consisting of hydroxyl group-containing copolymerizable monomers, carboxyl group-containing copolymerizable monomers, and nitrogen-containing vinyl monomers; and a curable resin, wherein the adhesive composition layer has

    a 23°C initial tensile modulus of elasticity of 0.35 MPa or more and yet 8.00 MPa or less before curing the curable resin in the adhesive composition, and
    a 23°C initial tensile modulus of elasticity of 1.00 MPa or more after curing the curable resin in the adhesive composition.

2.  The adhesive composition layer of claim 1, wherein,

    the at least one copolymerizable functional group-containing monomer comprises a nitrogen-containing vinyl monomer; and
    the mass ratio between the at least one (meth)acrylate monomer and the nitrogen-containing vinyl monomer is between 90:10 and 60:40.

3.  The adhesive composition layer of claim 1 or 2, wherein,

    the at least one copolymerizable functional group-containing monomer comprises a carboxyl group-containing copolymerizable monomer; and
    the carboxyl group-containing copolymerizable monomer is contained in an amount of 1.0 mass part or more and yet 10.0 mass parts or less with respect to 100 mass parts of the polymer.

4.  The adhesive composition layer of any one of claims 1 to 3, wherein the copolymer is cross-linked.

5.  The adhesive composition layer of any one of claims 1 to 4, wherein the curable resin comprises a UV-curable resin having a weight average molecular weight of 4000 or more and a photopolymerization initiator.

6.  The adhesive composition layer of any one of claims 1 to 5 having a 180° peel adhesive strength of 10 mN/20 mm or more with respect to a PMMA film after curing the curable resin in the adhesive composition.

7.  The adhesive composition layer of any one of claims 1 to 6 having a haze of 0.01% or more and yet 5% or less after curing the curable resin in the adhesive composition.

8. The adhesive composition layer of any one of claims 1 to 7 having a gel fraction of 75% or more before curing the curable resin in the adhesive composition, and a gel fraction of 90% or more after curing the curable resin in the adhesive composition.

9. The adhesive composition layer of any one of claims 1 to 8, wherein the adhesive composition does not comprise a graft polymer.

10. The adhesive composition layer of any one of claims 1 to 9, having a thickness of 0.1 $\mu$m or more and yet 20 $\mu$m or less after curing the curable resin in the adhesive composition.

11. A multilayered body comprising:

   the adhesive composition layer of any one of claims 1 to 10; and
   a substrate having a release-treated principal face,
   wherein the release-treated principal face of the substrate is attached onto the adhesive composition layer.

12. An optical stack comprising:

   a first optical sheet including a first principal face having a concavo-convex structure and a second principal face on an opposite side from the first principal face; and
   an adhesive layer disposed on the first principal face of the first optical sheet, wherein,
   the adhesive layer is formed by curing a curable resin in an adhesive composition that contains a polymer and the curable resin; and the adhesive composition has
   a 23°C initial tensile modulus of elasticity of 0.35 MPa or more and yet 8.00 MPa or less before curing the curable resin in the adhesive composition, and
   a 23°C initial tensile modulus of elasticity of 1.00 MPa or more after curing the curable resin in the adhesive composition.

13. The optical stack of claim 12, wherein the adhesive layer is formed by curing the curable resin in the adhesive composition layer of any one of claims 1 to 10.

14. The optical stack of claim 12 or 13, wherein the concavo-convex structure includes a plurality of dents, and a surface of the adhesive layer and the first principal face of the first optical sheet define a plurality of spaces within the plurality of dents.

15. The optical stack of any one of claims 12 to 14, wherein the concavo-convex structure includes a flat portion that is in contact with the adhesive layer.

16. The optical stack of any one of claims 12 to 15, further comprising a second optical sheet disposed on an opposite side of the adhesive layer from the first optical sheet.

17. An optical device comprising the optical stack of any one of claims 12 to 16.

18. A method of producing the optical stack of any one of claims 12 to 16, comprising:

   a step A of applying the adhesive composition layer made from the adhesive composition onto the first principal face of the first optical sheet; and
   a step B of, with the adhesive composition layer being applied on the first principal face of the first optical sheet, curing the curable resin in the adhesive composition.

19. The production method of claim 18, wherein the step A comprises a step of attaching together the first optical sheet and the adhesive composition layer by roll-to-roll method.

20. A production method for the optical stack of claim 16, comprising:

   either one of

      a step A1 of attaching together: a first multilayered body in which the first optical sheet and the adhesive composition layer made from the adhesive composition are stacked; and the second optical sheet, or
a step A2 of attaching together: a second multilayered body in which the adhesive composition layer made from the adhesive composition and the second optical sheet are stacked;

and the first optical sheet; and
a step B of, after the step A1 or the step A2, curing the curable resin comprised in the adhesive composition layer.

21. The production method of claim 20, wherein: the production method comprises the step A1, the step A1 comprising a step of attaching together the first multilayered body and the second optical sheet by roll-to-roll method; or the production method comprises the step A2, the step A2 comprising a step of attaching together the second multilayered body and the first optical sheet by roll-to-roll method.

FIG.1

FIG.2

FIG.3

*FIG.4*

10b

12s(10s)

14

15

17s

16s

18s

*FIG.5*

200

16s   17s   15   14s                28s   18s

14                                      10b
                                        20b   100B
                                              102B
                                        50

60                                22s   12s(10s)

*FIG.6A*

*FIG.6B*

## INTERNATIONAL SEARCH REPORT

| | International application No. |
|---|---|
| | PCT/JP2021/006453 |

**A. CLASSIFICATION OF SUBJECT MATTER**
C09J 4/06(2006.01)i; C09J 11/06(2006.01)i; C09J 133/06(2006.01)i; B32B 37/12(2006.01)i; G02B 5/02(2006.01)i; B29C 65/48(2006.01)i; C09J 7/30(2018.01)i; B32B 7/022(2019.01)i; B32B 3/26(2006.01)i
FI:     C09J133/06; C09J11/06; C09J7/30; C09J4/06; B32B7/022; B32B37/12; G02B5/02 B; B29C65/48; B32B3/26 Z
According to International Patent Classification (IPC) or to both national classification and IPC

**B. FIELDS SEARCHED**

Minimum documentation searched (classification system followed by classification symbols)
C09J4/06; C09J11/06; C09J133/06; B32B37/12; G02B5/02; B29C65/48; C09J7/30; B32B7/022; B32B3/26

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2018-019022 A (NITTO DENKO CORP.) 01 February 2018 (2018-02-01) paragraph [0091], example 1 | 1, 4-7, 9-11<br>2-3, 8, 12-21 |
| X<br><br>A | JP 2003-301147 A (NITTO DENKO CORP.) 21 October 2003 (2003-10-21) paragraphs [0007], [0035], example 2<br>paragraphs [0007], [0035], example 2 | 1, 3-4, 6-7, 9-18, 20<br><br>2, 5, 8, 19, 21 |
| A | JP 2002-248704 A (NITTO DENKO CORP.) 03 September 2002 (2002-09-03) paragraphs [0041]-[0042] | 1-21 |
| A | JP 2017-061676 A (THE NIPPON SYNTHETIC CHEMICAL INDUSTRY CO., LTD.) 30 March 2017 (2017-03-30) claims | 1-21 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April 20201 (08.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 4 108 731 A1**

| | INTERNATIONAL SEARCH REPORT | International application No. |
|---|---|---|
| | | PCT/JP2021/006453 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-069647 A (NITTO DENKO CORP.) 09 May 2016 (2016-05-09) claims | 1-21 |
| A | WO 2017/010501 A1 (OJI HOLDINGS CORPORATION) 19 January 2017 (2017-01-19) claims | 1-21 |
| A | JP 2006-512442 A (3M INNOVATIVE PROPERTIES COMPANY) 13 April 2006 (2006-04-13) claims | 1-21 |

Form PCT/ISA/210 (continuation of second sheet) (January 2015)

INTERNATIONAL SEARCH REPORT

Information on patent family members

| International application No. |
|---|
| PCT/JP2021/006453 |

| Patent Documents referred in the Report | Publication Date | Patent Family | Publication Date |
|---|---|---|---|
| JP 2018-019022 A | 01 Feb. 2018 | CN 107665853 A example 1 KR 10-2018-0013715 A SG 10201705697R A TW 201816862 A | |
| JP 2003-301147 A | 21 Oct. 2003 | (Family: none) | |
| JP 2002-248704 A | 03 Sep. 2020 | US 2004/0052080 A1 paragraphs [0049]-[0050] EP 1391292 A1 | |
| JP 2017-061676 A | 30 Mar. 2017 | (Family: none) | |
| JP 2016-069647 A | 09 May 2016 | US 2017/0218231 A1 claims WO 2016/052424 A1 TW 201619321 A CN 106715625 A KR 10-2017-0063705 A | |
| WO 2017/010501 A1 | 19 Jan. 2017 | TW 201715005 A claims | |
| JP 2006-512442 A | 13 Apr. 2006 | US 2004/0127594 A1 claims US 2005/0191507 A1 WO 2004/060946 A1 EP 1578823 A1 CN 1732193 A KR 10-2005-0088241 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012007046 A
- JP 5658490 B
- WO 2019087118 A

**Non-patent literature cited in the description**

- Organic Peroxides Catalog. Nichiyu Co, May 2003